# EUROPÄISCHE PATENTSCHRIFT

(11) **EP 3 138 266 B1**
(45) Veröffentlichungstag und Bekanntmachung des Hinweises auf die Patenterteilung: **16.01.2019**
(21) Anmeldenummer: 15712847.1
(22) Anmeldetag: 20.03.2015
(51) Int. Cl.: H04L 29/08, H04W 4/02, H04W 72/04, H04B 17/318, H04W 76/11

(54) **VORRICHTUNG UND VERFAHREN ZUM VERFÜGBARMACHEN VON INFORMATIONEN**
APPARATUS AND METHOD FOR MAKING INFORMATION AVAILABLE
DISPOSITIF ET PROCÉDÉ DE MISE À DISPOSITION D'INFORMATIONS

(30) Priorität: 30.04.2014 DE 102014006234; 27.05.2014 DE 102014007668
(43) Veröffentlichungstag der Anmeldung: 08.03.2017
(73) Patentinhaber: ICE Gateway GmbH, 12489 Berlin (DE)
(72) Erfinder: MOKHTARI, Ramin Lavae, 14471 Potsdam (DE); ASCHEID, Gerd, 52072 Aachen (DE)
(74) Vertreter: Cohausz & Florack
(86) Internationale Anmeldenummer: PCT/EP2015/055900
(87) Internationale Veröffentlichungsnummer: WO 2015/165642

(56) Entgegenhaltungen:
- CN-A- 101 541 123
- KR-A- 20110 100 745
- US-A1- 2007 058 634
- US-A1- 2009 251 314
- US-A1- 2014 009 306
- US-A1- 2014 047 322
- LEACH MICROSOFT M MEALLING REFACTORED NETWORKS P ET AL: "A Universally Unique IDentifier (UUID) URN Namespace; rfc4122.txt", 20050701, 1. Juli 2005 (2005-07-01), XP015041880, ISSN: 0000-0003

## Beschreibung

### Gebiet der Erfindung

Die vorliegende Erfindung betrifft unter anderem eine Vorrichtung und ein Verfahren zum Verfügbarmachen von Informationen im Außenbereich.

### Hintergrund der Erfindung

Im Stand der Technik sind Vorrichtungen bekannt, die im Außenbereich unmittelbar ortsbezogene und dynamische Informationen bereitstellen, zum Beispiel auf Displays oder ähnlichem. Diese Vorrichtungen sind jedoch aufwändig in der Aufstellung und im Unterhalt. Ferner besteht für eine wachsende Anzahl von mobilen Sensoren und mobilen Geräten die Notwendigkeit, Daten aus einem Netzwerk zu empfangen. Dies ist in vielen Fällen mit hohen Kosten verbunden. Außerdem kann der wachsende Bedarf an zu übertragenden Daten wie Videodaten und Audiodaten nicht mit einer konstanten Qualität aus einem solchen Netzwerk gedeckt werden. Dabei existieren insbesondere viele Video- und Audiodaten, die kaum bzw. selten verändert werden und nur an bestimmten Positionen von Interesse sind. Ferner gibt es viele APPs, mobile Anwendungen, Sensoren und Geräte, die die übliche GPS Signale für die Ortung verwenden. Diese Signale erfüllen nicht den wachsenden Bedarf an Genauigkeit im Außenbereich.

Die Patentveröffentlichungsschrift US 2007/058634 A1 (GUPTA VIPUL [US] ET AL) (2007-03-15) offenbart Zugang zu drahtlosen Sensoren über ein Gateway welches einen Webserver umfasst. Die Patentveröffentlichungsschrift US 2009/251314 A1 (HANG JOE-AIR [TW] ET AL) (2009-10-08) offenbart die Zusammenstellung von Umweltdaten auf Webseiten, wobei die Sensordaten über eine Gatewayeinheit empfangen werden. Die Patentveröffentlichungsschrift US 2014/009306 A1 (HAUPT ROLF [HK] ET AL) (2014-01-09) offenbart ein Überwachungssystem auf Abstand. Die Patentveröffentlichungsschrift US 2014/047322 A1 (KIM DAEYOUNG [KR] ETAL) (2014-02-13) offenbart ein Verfahren zum Browsen von Ressourcen-limitierten "Dingen" im Kontext des Internets der Dinge.

### Zusammenfassung einiger beispielhafter Ausgestaltungen der vorliegenden Erfindung

Eine Aufgabe der vorliegenden Erfindung ist es deshalb, die oben genannten Nachteile zu überwinden.

Diese Aufgabe wird gelöst durch den Gegenstand des unabhängigen Anspruchs 1, der ein erstes erfindungsgemäßes Verfahren betrifft, und des zum Anspruch 1 korrespondierenden unabhängigen Vorrichtungsanspruchs 10 sowie des Gegenstands des unabhängigen Anspruchs 12, der ein zweites erfindungsgemäßes Verfahren betrifft, und des zum Anspruch 12 korrespondierenden unabhängigen Serveranspruchs 13 sowie des Gegenstands des Computerprogrammanspruchs 14 und des Systemanspruchs 15. Vorteilhafte beispielhafte Ausgestaltungen der Erfindung sind den abhängigen Ansprüchen zu entnehmen.

Ferner wird ein drittes Verfahren offenbart, welches das drahtlose Empfangen von Aussendeinformationen an einer mobilen Vorrichtung umfasst, wobei die Aussendeinformationen einen Bezeichner einer Vorrichtung umfassen, wobei der Bezeichner mit einer Ressource assoziiert ist.

Die erfindungsgemäße Vorrichtung ist zum Beispiel zur Verwendung im Außenbereich bestimmt. Unter einer Verwendung im Außenbereich soll beispielsweise verstanden werden, dass die erfindungsgemäße Vorrichtung im Außenbereich montiert wird. Zum Beispiel soll als Verwendung im Außenbereich verstanden werden, wenn die erfindungsgemäße Vorrichtung in oder an einer anderen im Außenbereich befindlichen Vorrichtung wie einer Straßenlampe angeordnet wird. Unter dem Außenbereich soll beispielsweise ein Bereich (z.B. ein öffentlicher Bereich) außerhalb eines umbauten Raums verstanden werden wie zum Beispiel Straßen, Wege und Plätze.

Zum Beispiel umfassen die Mittel der erfindungsgemäßen Vorrichtung zur Ausführung und/oder Steuerung der Ausführung der Schritte des ersten erfindungsgemäßen Verfahrens Sendemittel, wobei die Sendemittel eingerichtet sind, die Aussendeinformationen drahtlos auszusenden. Beispielsweise umfassen die Sendemittel Kommunikationsmittel wie eine drahtlose Kommunikationsschnittstelle zum Aussenden der Aussendeinformationen. Eine drahtlose Kommunikationsschnittstelle ist beispielsweise eine Antenne, ein drahtloses Kommunikationsmodul (z.B. ein drahtloses Netzwerkmodul oder eine drahtlose Netzwerkkarte) und/oder ein drahtloses Modem. Beispielsweise ist die drahtlose Kommunikationsschnittstelle eine drahtlose Netzwerkschnittstelle.

Zum Beispiel sind die Mittel der erfindungsgemäßen Vorrichtung zur Ausführung und/oder Steuerung der Ausführung der Schritte des ersten erfindungsgemäßen Verfahrens zumindest teilweise als Hardwaremodul ausgebildet. Ein Hardwaremodul ist beispielsweise eingerichtet, eine oder mehrere Logikfunktionen auszuführen. Die Logikfunktionen können in einem einmal-programmierbaren Hardwaremodul (unveränderlich) festverdrahtet bzw. festeinprogrammiert sein. Die Logikfunktionen können in einem programmierbaren Hardwaremodul (veränderlich) einprogrammiert sein (z.B. per Firmware und/oder Software). Ein Hardwaremodul ist beispielsweise eine elektronische Schaltung, ein Prozessor und/oder eine programmierbare logische Schaltung (PLD).

Zum Beispiel umfassen die Mittel der erfindungsgemäßen Vorrichtung zur Ausführung und/oder Steuerung der Ausführung der Schritte des ersten erfindungsgemäßen Verfahrens zumindest einen Prozessor und einen Speicher mit Programmanweisungen (z.B. einen Programmspeicher und einen Hauptspeicher), wobei der zumindest eine Speicher und die Programmanweisungen eingerichtet sind, um, zusammen mit dem zumindest einen Prozessor, die erfindungsgemäße Vorrichtung zu veranlassen, die Schritte des ersten erfindungsgemäßen Verfahrens auszuführen. Zum Beispiel sind der zumindest eine Speicher und die Programmanweisungen eingerichtet, um, zusammen mit dem zumindest einen Prozessor, die Sendemittel der erfindungsgemäßen Vorrichtung zu veranlassen, die Aussendeinformationen drahtlos auszusenden.

Ein Beispiel für einen Prozessor ist ein Universalprozessor, ein Mikroprozessor, eine Mikrokontrolleinheit wie ein Mikrokontroller, ein digitaler Signalprozessor (DSP), eine anwendungsspezifische Integrierte Schaltung (ASIC: Application-Specific Integrated Circuit), ein Field Programmable Gate Array (FPGA) und ein Prozessor mit einem anwendungsspezifischem Befehlssatz (ASIP: Application-Specific Instruction-Set Processor).

Zum Beispiel umfassen die Mittel des erfindungsgemäßen Servers zur Ausführung und/oder Steuerung der Schritte des zweiten erfindungsgemäßen Verfahrens Bereitstellungsmittel, wobei die Bereitstellungsmittel eingerichtet sind, die Ressource bereitzustellen.

Zum Beispiel umfassen die Mittel des erfindungsgemäßen Servers zur Ausführung und/oder Steuerung der Schritte des Verfahrens des zweiten erfindungsgemäßen Verfahrens zumindest einen Prozessor und zumindest einen Speicher mit Programmanweisungen (z.B. einen Programmspeicher und einen Hauptspeicher), wobei der zumindest eine Speicher und die Programmanweisungen eingerichtet sind, um, zusammen mit dem zumindest einen Prozessor, den erfindungsgemäßen Server zu veranlassen, die Schritte des zweiten erfindungsgemäßen Verfahrens auszuführen. Zum Beispiel sind der zumindest eine Speicher und die Programmanweisungen eingerichtet, um, zusammen mit dem zumindest einen Prozessor, die Bereitstellungsmittel des erfindungsgemäßen Servers zu veranlassen, die Ressource bereitzustellen.

Ferner wird eine mobile Vorrichtung offenbart. Ein Beispiel für eine mobile Vorrichtung ist beispielsweise ein entsprechend eingerichtetes Benutzergerät wie ein mobiles Kommunikationsgerät wie ein Mobiltelefon, ein tragbarer Computer, ein Tablet-Computer oder ein persönlicher digitaler Assistent. Ein weiteres Beispiel für eine erfindungsgemäße mobile Vorrichtung ist beispielsweise ein Fahrzeug (z.B. ein Kraftfahrzeug), insbesondere ein selbstfahrendes Fahrzeug (z.B. eine Drohne oder ein autonomes Kraftfahrzeug).

Zum Beispiel umfassen die Mittel der mobilen Vorrichtung zur Ausführung und/oder Steuerung der Schritte des dritten Verfahrens Empfangsmittel, wobei die Empfangsmittel eingerichtet sind, die Aussendeinformationen drahtlos zu empfangen. Beispielsweise umfassen die Empfangsmittel Kommunikationsmittel wie eine drahtlose Kommunikationsschnittstelle zum Empfangen der Aussendeinformationen. Eine drahtlose Kommunikationsschnittstelle ist, wie oben beschrieben, beispielsweise eine Antenne, ein drahtloses Kommunikationsmodul (z.B. ein drahtloses Netzwerkmodul oder eine drahtlose Netzwerkkarte) und/oder ein drahtloses Modem. Beispielsweise ist die drahtlose Kommunikationsschnittstelle eine drahtlose Netzwerkschnittstelle.

Zum Beispiel umfassen die Mittel der mobilen Vorrichtung zur Ausführung und/oder Steuerung der Ausführung der Schritte des dritten Verfahrens zumindest einen Prozessor und einen Speicher mit Programmanweisungen (z.B. einen Programmspeicher und einen Hauptspeicher), wobei der zumindest eine Speicher und die Programmanweisungen eingerichtet sind, um, zusammen mit dem zumindest einen Prozessor, die mobile Vorrichtung zu veranlassen, die Schritte des dritten Verfahrens auszuführen. Zum Beispiel sind der zumindest eine Speicher und die Programmanweisungen eingerichtet, um, zusammen mit dem zumindest einen Prozessor, die Empfangsmittel der Vorrichtung zu veranlassen, die Aussendeinformationen drahtlos zu empfangen.
Unter Aussenden der Aussendeinformationen soll beispielsweise verstanden werden, dass die Aussendeinformationen derart ausgesendet werden, dass sie von allen Empfängern (z.B. mobilen Geräten und/oder Benutzergeräten wie Mobiltelefonen und/oder der erfindungsgemäßen mobilen Vorrichtung), die sich in Sendereichweite der Sendemittel befinden und die über entsprechende Empfangsmittel verfügen, empfangen werden können. Zum Beispiel kann die erfindungsgemäße mobile Vorrichtung, wie oben beschrieben, entsprechende Empfangsmittel umfassen. Die Sendereichweite der Sendemittel ist beispielsweise auf einen Bereich mit einem Radius von weniger als 500 m um die erfindungsgemäße Vorrichtung, vorzugsweise mit einem Radius von weniger als 100 m um die erfindungsgemäße Vorrichtung, besonders vorzugsweise mit einem Radius von weniger als 50 m um die erfindungsgemäße Vorrichtung beschränkt.

Zum Beispiel werden die Aussendeinformationen in Form eines Funksignals ausgesendet, zum Beispiel in Form eines Rundfunksignals. Zum Beispiel werden die Aussendeinformationen in Form eines Funksignals gemäß einem drahtlosen Kommunikationsprotokoll ausgesendet. Ein Beispiel für solche drahtlose Kommunikationsprotokolle sind die IEEE 802-Kommunikationsprotokolle wie WLAN (WLAN: Wireless Local Area Network, IEEE 802.11), WiMAX (WiMAX: Worldwide Interoperability for Microwave Access, IEEE 802.16), Bluetooth (802.15.1), Bluetooth Low Energy und Zigbee (IEEE 802.15.4). Ein weiteres Beispiele für ein solches drahtloses Kommunikationsprotokolle ist RFID (RFID: Radio-Frequency Identification). Das drahtlose RFID-Kommunikationsprotokoll ist beispielsweise in den Normen ISO 10536, ISO 14443, ISO 18000-3ISO 15693ISO 18000-4, ISO 18000-5, ISO 18000-7 definiert. Ein weiteres Beispiele für ein solches drahtloses Kommunikationsprotokolle ist NFC (NFC: Near Field Communication). Das drahtlose NFC-Kommunikationsprotokoll ist beispielsweise in den Normen ISO 14443, ISO 18092, ISO 21481, ECMA 340, ECMA 352, ECMA 356, ECMA 362 und ETSI TS 102 190 definiert. Das Funksignal umfasst die Aussendeinformationen beispielsweise als Nutzinformationen.

Zum Beispiel umfassen die Aussendeinformationen zumindest den Bezeichner der Vorrichtung. Zum Beispiel umfassen die Aussendeinformationen neben dem Bezeichner der Vorrichtung noch weitere Informationen und/oder Angaben.

Der Bezeichner der Vorrichtung ist beispielsweise ein Bezeichner, der eine Identifizierung der Vorrichtung ermöglicht. Zum Beispiel ist der Bezeichner ein eindeutiger Bezeichner für die Vorrichtung. Zum Beispiel ist der Bezeichner ein Name der Vorrichtung, eine geographische Positionsangabe der Vorrichtung, eine Adresse der Vorrichtung oder der Sendemittel (z.B. eine Netzwerkadresse wie eine Bluetooth-Adresse, eine IP-Adresse oder eine MAC-Adresse) oder eine Seriennummer. Zum Beispiel ist der Bezeichner ein sogenannter Universally Unique Identifier wie er beispielsweise im Dokument "Request for Comments: 4122" der Internet Engineering Task Force (IETF) definiert ist.

Unter einer Ressource soll beispielsweise eine Informationsressource und/oder Informationsquelle verstanden werden, die eine oder mehrere Informationen umfasst, zum Beispiel eine Informationsquelle, die Text-, Audio-, Bild- und/oder Videoinformationen und/oder Positionsinformationen enthält. Zum Beispiel ist die Ressource eine Ressource in einem Netzwerk (z.B. eine Netzwerkressource), auf die über das Netzwerk zugegriffen werden kann. Ein Beispiel für eine Ressource in einem Netzwerk (z.B. eine Netzwerkressource) ist eine Webseite (z.B. eine Webseite mit Text-, Audio- und/oder Videoinformationen).

Unter Bereitstellen der Ressource soll beispielsweise verstanden werden, dass eine mobile Vorrichtung auf die Ressource und/oder die von der Ressource umfassten Informationen zugreifen kann (z.B. die Ressource und/oder die von der Ressource umfassten Informationen zugreifbar sind) und/oder die Ressource und/oder die von der Ressource umfassten Informationen an der mobile Vorrichtung erhalten werden können (z.B. die Ressource und/oder die von der Ressource umfassten Informationen erhaltbar sind). Zum Beispiel umfasst das Bereitstellen der Ressource das Bereitstellen der Ressource und/oder der von der Ressource umfassten Informationen zum Zugreifen über ein Netzwerk, beispielsweise zum Abrufen und/oder zum Herunterladen über ein Netzwerk. Zum Beispiel umfasst das Bereitstellen der Ressource das Senden der Ressource und/oder der von der Ressource umfassten Informationen über ein Netzwerk.

Ein Netzwerk kann ein lokales Netzwerk wie ein Local Area Network oder ein nichtlokales Netzwerk wie das Internet sein. Ein Netzwerk kann zumindest teilweise drahtlos und/oder zumindest teilweise drahtgebunden sein. Ein Beispiel für ein Netzwerk ist ein Telefonnetzwerk. Ein Beispiel für ein drahtloses Netzwerk ist ein Mobilfunknetzwerk wie ein GSM-Netzwerk (GSM: Global System for Mobile Communications), ein GPRS-Netzwerk (GPRS: General Packet Radio Service), ein UMTS-Netzwerk (UMTS: Universal Mobile Telecommunications System), ein LTE-Netzwerk (LTE: Long Term Evolution). Ein weiteres Beispiel für ein Netzwerk ist ein drahtloses IEEE 802-Netzwerk wie ein WLAN-Netzwerk (WLAN: Wireless Local Area Network, ein IEEE 802.11-Netzwerk), ein WiMAX-Netzwerk (WiMAX: Worldwide Interoperability for Microwave Access, ein IEEE 802.16-Netzwerk), ein Bluetooth-Netzwerk (ein 802.15.1-Netzwerk) und ein Zigbee-Netzwerk (ein IEEE 802.15.4-Netzwerk). Ein Beispiel für ein drahtgebundenes Netzwerk ist ein Ethernet-Netzwerk wie Power over Ethernet (PoE)-Netzwerk, ein PoE Plus-Netzwerk und ein Universal PoE (UPoE)-Netzwerk.

Zum Beispiel ist der erfindungsgemäße Server ein Server in einem Netzwerk wie dem Internet. Beispielsweise stellen die Bereitstellungsmittel die Ressource derart bereit, dass auf die Ressource über das Netzwerk zugegriffen werden kann. Beispielsweise umfassen die Bereitstellungsmittel erste Kommunikationsmittel, wobei die ersten Kommunikationsmittel eingerichtet sind, die Ressource zum Zugreifen über das Netzwerk bereitzustellen. Zum Beispiel umfassen die ersten Kommunikationsmittel eine Kommunikationsschnittstelle. Eine Kommunikationsschnittstelle ist beispielsweise eine Antenne, ein drahtloses und/oder ein drahtgebundenes Kommunikationsmodul (z.B. ein Netzwerkmodul oder eine Netzwerkkarte) und/oder ein Modem.. Zum Beispiel ist die Kommunikationsschnittstelle eine Netzwerkschnittstelle.
Der Bezeichner soll beispielsweise als mit der Ressource assoziiert verstanden werden, wenn die Ressource zumindest teilweise in Abhängigkeit des Bezeichners identifizierbar und/oder lokalisierbar ist.
Zum Beispiel stellt die Ressource ortsbezogene und dynamische Informationen bereit, die einen Bezug zu der geographischen Position der Vorrichtung und/oder deren Umgebung haben. Benutzer, die sich in der Umgebung der Vorrichtung befinden, können somit solche ortsbezogenen und dynamischen Informationen verfügbar gemacht werden, ohne dass die Ressource unmittelbar von der Vorrichtung bereitgestellt wird. Dies ist beispielsweise vorteilhaft, da entsprechende Mittel zur Bereitstellung der Ressource durch die Vorrichtung wie die erfindungsgemäße Vorrichtung nicht vorgehalten und auch nicht aktualisiert und gewartet werden müssen. Stattdessen kann die Ressource von einem Server wie dem erfindungsgemäßen Server und/oder von einem mobilen Gerät wie der mobilen Vorrichtung bereitgestellt werden. Grundsätzlich ist es jedoch auch denkbar, dass die erfindungsgemäße Vorrichtung die Ressource bereitstellt.
Ein erfindungsgemäßes System umfasst ein oder mehrere erfindungsgemäße Vorrichtungen und ein oder mehrere erfindungsgemäße Server. Zum Beispiel umfasst das erfindungsgemäße System ferner eine oder mehrere mobile Vorrichtungen. Zum Beispiel umfasst das erfindungsgemäße System eine Vielzahl erfindungsgemäßer Vorrichtungen.

Ein Computerprogramm ist beispielsweise über ein Netzwerk verteilbar. Ein Computerprogramm kann zumindest teilweise Software und/oder Firmware eines Prozessors sein. Zum Beispiel umfasst das erfindungsgemäße Computerprogramm ein oder mehrere Unterprogramme.
Das erfindungsgemäße Computerprogramm kann in einem computerlesbaren Speichermedium gespeichert sein, welches eines oder mehrere erfindungsgemäße Computerprogramme enthält und z.B. als magnetisches, elektrisches, elektromagnetisches, optisches und/oder andersartiges Speichermedium ausgebildet ist. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nichtflüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Eine erfindungsgemäße Verwendung ist die Verwendung der erfindungsgemäßen Vorrichtung im Außenbereich, insbesondere in oder an einer Lampe im Außenbereich, insbesondere in oder an einer Straßenlampe. Zum Beispiel die Verwendung der erfindungsgemäßen Vorrichtung an einer festen geographischen Position. Die Verwendung der erfindungsgemäßen Vorrichtung im Außenbereich ist beispielsweise vorteilhaft, um auf möglichst einfache Art und Weise Informationen, insbesondere ortsbezogene und dynamische Informationen, in einem öffentlichen Bereich verfügbar zu machen.

Im Folgenden werden beispielhafte Ausgestaltungen der vorliegenden Erfindung beschrieben, welche auf weitere beispielhafte Merkmale der erfindungsgemäßen Vorrichtung, des erfindungsgemäßen Servers, der erfindungsgemäßen Verfahren, des erfindungsgemäßen Systems und des erfindungsgemäßen Computerprogramms abstellen. Insbesondere sollen durch die Beschreibung eines zusätzlichen Verfahrensschritts eines erfindungsgemäßen Verfahrens auch als offenbart gelten entsprechende Mittel zur Durchführung des Schritts und eine entsprechende Programmanweisung des erfindungsgemäßen Computerprogramms, die eine Vorrichtung zur Ausführung des Verfahrensschritts veranlasst, wenn das Computerprogramm durch einen Prozessor der Vorrichtung ausgeführt wird. Das Gleiche soll auch für die Offenbarung eines Mittels zur Durchführung eines Verfahrensschritts oder einer Programmanweisung gelten, zum Beispiel soll die Offenbarung eines Mittels zur Durchführung eines Verfahrensschritts der erfindungsgemäßen Vorrichtung auch als Offenbarung des entsprechenden Verfahrensschritts des ersten erfindungsgemäßen Verfahrens und einer entsprechenden Programmanweisung des erfindungsgemäßen Computerprogramms verstanden werden.

Zum Beispiel werden die Umgebungsinformationen von einem Sensor erfasst und an der Vorrichtung von dem Sensor erhalten. Zum Beispiel umfassen die Mittel der erfindungsgemäße Vorrichtung zur Ausführung und/oder Steuerung der Ausführung der Schritte des ersten erfindungsgemäßen Verfahrens ferner zumindest einen Sensor und/oder Sensorverbindungsmittel.

Unter Umgebungsinformationen über die Umgebung der Vorrichtung sollen beispielsweise Informationen verstanden werden, die an der geographischen Position der Vorrichtung erfassbar sind (z.B. von dem zumindest einen Sensor der erfindungsgemäßen Vorrichtung unmittelbar oder mittelbar erfassbar sind). Beispiele für Informationen über die Umgebung der Vorrichtung sind Temperaturinformationen, Helligkeitsinformationen, Bewegungsinformationen, Schallinformationen, Audioinformationen, Bildinformationen, Videoinformationen und/oder Erschütterungsinformationen.

Zum Beispiel ist der zumindest eine Sensor eingerichtet, Umgebungsinformationen über die Umgebung der Vorrichtung zu erfassen.

Unter einem Sensor soll beispielsweise ein Gerät (z.B. eine Videokamera) und/oder ein Bauelement (z.B. ein CCD-Sensor und/oder ein CMOS-Sensor), insbesondere ein elektrisches oder elektronisches Bauelement verstanden werden, das eingerichtet ist, bestimmte physikalische oder chemische Eigenschaften (z. B. Strahlung, Temperatur, Feuchtigkeit, Druck, Schall, Helligkeit oder Beschleunigung) und/oder die stoffliche Beschaffenheit seiner Umgebung qualitativ oder als Messgröße quantitativ zu erfassen. Diese Informationen werden von dem Sensor beispielsweise mittels physikalischer oder chemischer Effekte erfasst und in ein weiterverarbeitbares elektrisches Signal und/oder weiterverarbeitbare Daten umgeformt.

Zum Beispiel ist der zumindest eine Sensor ein Temperatursensor (z.B. ein Thermometer, ein Thermoelement und/oder ein Thermowiderstand), ein Umgebungstemperatursensor, ein Helligkeitssensor, ein Bewegungssensor (z.B. ein Bewegungsmelder), ein akustischer Sensor, ein Schallsensor (z.B. ein Mikrofon), ein Ultraschallsensor, ein optischer Sensor, ein Infrarotsensor, ein Lichtsensor (z.B. eine Photodiode und/oder ein Photowiderstand), ein Bildsensor (z.B. eine Bildkamera, ein CMOS-Sensor und/oder ein CCD-Sensor), ein Videosensor (z.B. eine Videokamera, ein CMOS-Sensor und/oder ein CCD-Sensor), ein Stromsensor, ein Spannungssensor, ein Leistungssensor, ein chemischer Sensor (z.B. ein Gassensor), ein Explosivstofferkennungssensor und/oder ein Erschütterungssensor.

Der zumindest eine Sensor kann zum Beispiel drahtgebunden und/oder drahtlos mit der Vorrichtung verbunden sein. Zum Beispiel umfasst die erfindungsgemäße Vorrichtung Sensorverbindungsmittel wie eine Datenschnittstelle und/oder einen Analog-Digital-Wandler. Zum Beispiel sind die Sensorverbindungsmittel eingerichtet, eine Verbindung mit dem zumindest einen Sensor herzustellen. Ein Beispiel für eine Datenschnittstelle ist eine USB-Schnittstelle, eine IEEE 1394-Schnittstelle, eine CAN-Bus-Schnittstelle, eine Zigbee-Schnittstelle, eine Bluetooth-Schnittstelle, eine serielle Schnittstelle wie eine R232-Schnittstelle und/oder eine parallele Schnittstelle wie eine IEEE 1284-Schnittstelle. Zum Beispiel erhält die Vorrichtung (z.B. ein Prozessor der Vorrichtung) die von dem Sensor erfassten Umgebungsinformationen zumindest teilweise als Daten und/oder Signale über die Datenschnittstelle von dem Sensor. Zum Beispiel erhält die Vorrichtung (z.B. ein Prozessor der Vorrichtung) die von dem Sensor erfassten Umgebungsinformationen zumindest teilweise als Daten und/oder Signale über den Analog-Digital-Wandler von dem Sensor. Zum Beispiel sind die Datenschnittstelle und/oder der Analog-Digital-Wandler (drahtgebunden und/oder drahtlos) mit dem Sensor verbunden.

Zum Beispiel werden die von dem zumindest einen Sensor erfassten und an der Vorrichtung erhaltenen Umgebungsinformationen verarbeitet. Zum Beispiel werden die von dem Sensor erfassten und an der Vorrichtung erhaltenen Umgebungsinformationen durch die Vorrichtung verarbeitet. Beispielsweise umfassen die Mittel der erfindungsgemäße Vorrichtung zur Ausführung und/oder Steuerung der Ausführung der Schritte des ersten erfindungsgemäßen Verfahrens Verarbeitungsmittel, wobei die Verarbeitungsmittel eingerichtet sind, die von dem Sensor erfassten Umgebungsinformationen zu verarbeiten. Ein Beispiel für solche Verarbeitungsmittel ist zumindest ein Prozessor, beispielsweise zumindest ein Prozessor und ein Speicher mit entsprechenden Programmanweisungen, wie oben beschrieben. Zum Beispiel umfasst die erfindungsgemäße Vorrichtung zumindest einen Prozessor und einen Speicher mit Programmanweisungen, wobei der Speicher und die Programmanweisungen beispielsweise jeweils eingerichtet sind, um, zusammen mit dem zumindest einen Prozessor, den Prozessor zu veranlassen, die Umgebungsinformationen zu verarbeiten.
Unter Verarbeiten der Umgebungsinformationen soll beispielsweise das Organisieren und/oder Verändern der Umgebungsinformationen verstanden werden. Zum Beispiel umfasst das Verarbeiten der Umgebungsinformationen das Anwenden eines Verarbeitungsalgorithmus (z.B. eines Komprimierungsalgorithmus, eines Auswertungsalgorithmus und/oder eines Aufbereitungsalgorithmus) auf zumindest einen Teil der Umgebungsinformationen. Zum Beispiel sind die Verarbeitungsmittel der erfindungsgemäßen Vorrichtung eingerichtet, zumindest einen solchen Verarbeitungsalgorithmus auf zumindest einen Teil der Umgebungsinformationen anzuwenden.

Zum Beispiel werden die Umgebungsinformationen von der Vorrichtung über eine Netzwerkverbindung an den Server übertragen. Zum Beispiel werden die Umgebungsinformationen von der Vorrichtung über eine Netzwerkverbindung in einem ersten Netzwerk an den Server übertragen. Zum Beispiel ist die Vorrichtung über die Netzwerkverbindung in dem ersten Netzwerk direkt oder indirekt mit dem Server verbunden. Das erste Netzwerk ist beispielsweise ein privates und/oder ein geschütztes Netzwerk wie ein virtuelles privates Netzwerk (VPN). Unter einem privaten und/oder geschützten Netzwerk soll beispielsweise ein Netzwerk verstanden werden, mit dem sich Vorrichtungen erst nach einer Autorisierung und/oder Authentifizierung verbinden können und/oder in dem Informationen verschlüsselt übertragen werden.

Zum Beispiel werden die Umgebungsinformationen von der Vorrichtung direkt an den Server gesendet. Es ist jedoch auch denkbar, dass die Umgebungsinformationen von der Vorrichtung indirekt an den Server gesendet werden (z.B. über einen oder mehrere weitere Server).

Zum Beispiel umfassen die Mittel der erfindungsgemäßen Vorrichtung zur Ausführung und/oder Steuerung der Ausführung der Schritte des ersten erfindungsgemäßen Verfahrens Kommunikationsmittel, wobei die Kommunikationsmittel eingerichtet sind, Informationen zu senden (z.B. die Umgebungsinformationen an einen Server wie den erfindungsgemäßen Server zu senden); und die Mittel des erfindungsgemäßen Servers zur Ausführung und/oder Steuerung der Ausführung der Schritte des zweiten erfindungsgemäßen Verfahrens umfassen beispielsweise zweite Kommunikationsmittel, wobei die zweiten Kommunikationsmittel eingerichtet sind, Informationen zu empfangen (z.B. die Umgebungsinformationen von einer Vorrichtung wie der erfindungsgemäßen Vorrichtung zu empfangen).

Zum Beispiel sind die Kommunikationsmittel der erfindungsgemäßen Vorrichtung von den oben beschriebenen Sendemitteln der erfindungsgemäßen Vorrichtung zumindest teilweise verschieden. Zum Beispiel sind die Kommunikationsmittel der erfindungsgemäßen Vorrichtung eingerichtet, die Informationen über ein Netzwerk an den Server zu senden (z.B. über eine Netzwerkverbindung). Zum Beispiel sind die Kommunikationsmittel der erfindungsgemäßen Vorrichtung eingerichtet, die Informationen über ein drahtloses Netzwerk an den Server zu senden. Zum Beispiel umfassen die Kommunikationsmittel eine Kommunikationsschnittstelle. Eine Kommunikationsschnittstelle ist beispielsweise eine Antenne, ein drahtloses und/oder ein drahtgebundenes Kommunikationsmodul (z.B. ein Netzwerkmodul oder eine Netzwerkkarte) und/oder ein Modem. Zum Beispiel ist die Kommunikationsschnittstelle eine Netzwerkschnittstelle (z.B. eine drahtlose Netzwerkschnittstelle).

Zum Beispiel sind die zweiten Kommunikationsmittel des erfindungsgemäßen Servers eingerichtet, die Informationen von der Vorrichtung über ein Netzwerk zu empfangen (z.B. über eine Netzwerkverbindung). Zum Beispiel umfassen die zweiten Kommunikationsmittel eine Kommunikationsschnittstelle. Eine Kommunikationsschnittstelle ist beispielsweise eine Antenne, ein drahtloses und/oder ein drahtgebundenes Kommunikationsmodul (z.B. ein Netzwerkmodul oder eine Netzwerkkarte) und/oder ein Modem.. Zum Beispiel ist die Kommunikationsschnittstelle eine Netzwerkschnittstelle. Die oben beschriebenen ersten Kommunikationsmittel des erfindungsgemäßen Servers entsprechen beispielsweise den zweiten Kommunikationsmitteln des erfindungsgemäßen Servers. Es ist jedoch auch denkbar, dass die ersten Kommunikationsmittel des erfindungsgemäßen Servers von den zweiten Kommunikationsmitteln des erfindungsgemäßen Servers verschieden sind.

Zum Beispiel umfassen die erfindungsgemäße Vorrichtung und der erfindungsgemäße Server, wie oben beschrieben, jeweils zumindest einen Prozessor und einen Speicher mit Programmanweisungen, wobei der Speicher und die Programmanweisungen beispielsweise jeweils eingerichtet sind, um, zusammen mit dem zumindest einen Prozessor, die jeweiligen Kommunikationsmittel zu veranlassen, die Informationen zu senden und/oder zu empfangen.

Die gesendeten Umgebungsinformationen beruhen beispielsweise auf den erfassten und/oder erhaltenen Umgebungsinformationen über die Umgebung der Vorrichtung, wenn sie die erfassten und/oder erhaltenen Umgebungsinformationen über die Umgebung der Vorrichtung in verarbeiteter oder unverarbeiteter Form zumindest teilweise umfassen. Zum Beispiel umfassen die von der Vorrichtung an den Server gesendeten Umgebungsinformationen die von dem zumindest einen Sensor erfassten Umgebungsinformationen über die Umgebung der Vorrichtung zumindest teilweise in unverarbeiteter Form (z.B. in der vom Sensor ausgegebenen Form). Zum Beispiel umfassen die von der Vorrichtung an den Server gesendeten Umgebungsinformationen die von dem zumindest einen Sensor erfassten Umgebungsinformationen über die Umgebung der Vorrichtung zumindest teilweise in verarbeiteter Form (z.B. in komprimierter und/oder ausgewerteter Form).

Zum Beispiel wird die Ressource derart bereitgestellt, dass die von der Ressource umfassten Informationen zumindest teilweise in Abhängigkeit von den von der Vorrichtung empfangenen Informationen, insbesondere Umgebungsinformationen über die Umgebung der Vorrichtung, angepasst sind. Zum Beispiel werden die von der Ressource umfassten Informationen derart angepasst, dass die Ressource, wenn schlechtes Wetter (z.B. bei Niederschlag) in der Umgebung der Vorrichtung erfasst wird, andere Informationen umfasst, als wenn gutes Wetter (z.B. kein Niederschlag) in der Umgebung der Vorrichtung erfasst wird. Dies ist beispielsweise vorteilhaft, um die Ressource und die von der Ressource umfassten Informationen an die Situation in der Umgebung der Vorrichtung anpassen zu können und ortsbezogene Informationen dynamisch anpassen und verfügbar machen zu können.
Die Informationen der Ressource können somit dynamisch und in Abhängigkeit der von dem zumindest einen Sensor erfassten Umgebungsinformationen angepasst werden. Dies ist beispielsweise vorteilhaft, um dynamisches Content Management und Sensor Specific Dynamic Contents zu ermöglichen.

Das zweite Netzwerk ist beispielsweise ein von dem ersten Netzwerk verschiedenes Netzwerk. Zum Beispiel ist das zweite Netzwerk ein öffentliches und/oder ungeschütztes Netzwerk wie das Internet. Unter einem öffentlichen und/oder ungeschützten Netzwerk soll beispielsweise ein Netzwerk verstanden werden, mit dem sich Vorrichtungen ohne vorherige Autorisierung und/oder Authentifizierung verbinden können und/oder in dem Informationen unverschlüsselt übertragen werden.

Einige nicht abschließende Beispiele für drahtlose Kommunikationsprotokolle sind oben gegeben. Zum Beispiel arbeiten die Kommunikationsmittel der erfindungsgemäßen Vorrichtung gemäß einem anderen Kommunikationsprotokoll als die Sendemittel der erfindungsgemäßen Vorrichtung.

In beispielhaften Ausgestaltungen der Erfindung werden die Aussendeinformationen in Form eines Funksignals, insbesondere in Form eines Rundfunksignals, eines Funkfeuersignals, eines Beacon-Signals (z.B. eines iBeacon-Signals), eines Bluetooth-Signals, eines RFID-Signal, eines NFC-Signals oder eines FCN-Signals, ausgesendet. Zum Beispiel sind die Sendemittel der erfindungsgemäßen Vorrichtung eingerichtet, die Aussendeinformationen in Form eines Funksignals, insbesondere in Form eines Rundfunksignals, eines Funkfeuersignals, eines Beacon-Signals (z.B. eines iBeacon-Signals), eines Bluetooth-Signals, eines RFID-Signal, eines NFC-Signals oder eines FCN-Signals, auszusenden. Zum Beispiel umfassen die Sendemittel einen Bluetooth-Sender, einen iBeacon-Sender, einen Beacon-Sender, einen RFID-Sender, einen NFC-Sender und/oder einen FCN-Sender.

Zum Beispiel umfassen die Aussendeinformationen eine Signalstärkenangabe, wobei die Signalstärkenangabe von einer Signalstärke des Funksignals abhängt. Zum Beispiel wird das Funksignal mit einer konstanten Signalstärke ausgesendet. Zum Beispiel gibt die Signalstärkenangabe die Signalstärke und/oder eine Größenordnung der Signalstärke des Funksignals an, mit dem die Aussendeinformationen ausgesendet werden. Zum Beispiel gibt die Signalstärkenangabe die Signalstärke und/oder eine Größenordnung der Signalstärke des Funksignals in einer von der Vorrichtung vorgegebenen Entfernung an (z.B. in einer Entfernung von 5 m, vorzugsweise 3 m, besonders vorzugsweise 1m). Unter der Signalstärke des Funksignals soll beispielsweise die Leistung des Funksignals (z.B. die Sende- und/oder die Empfangsleistung des Funksignals) verstanden werden.

Dies ist beispielsweise vorteilhaft, um das Bestimmen der Position eines mobilen Geräts wie der erfindungsgemäßen mobilen Vorrichtung, das die Aussendeinformationen empfängt, unterstützen zu können.

In beispielhaften Ausgestaltungen der Erfindung werden die Aussendeinformationen in regelmäßigen Zeitabständen ausgesendet. Es ist jedoch auch denkbar, dass die Aussendeinformationen in unregelmäßigen Zeitabständen ausgesendet werden. Zum Beispiel sind die Sendemittel eingerichtet, die Aussendeinformationen in regelmäßigen und/oder unregelmäßigen Zeitabständen auszusenden.

In beispielhaften Ausgestaltungen der Erfindung ist der Bezeichner ein eindeutiger Bezeichner der Vorrichtung (z.B. der erfindungsgemäßen Vorrichtung).

In beispielhaften Ausgestaltungen der Erfindung ist der Bezeichner ein Universally Unique Identifier. Zum Beispiel ist der Bezeichner, wie oben beschrieben, ein sogenannter Universally Unique Identifier wie er im Dokument "Request for Comments: 4122" der Internet Engineering Task Force definiert ist.

In beispielhaften Ausgestaltungen der Erfindung ist der Bezeichner mit der Ressource durch einen Eintrag in einer Datenbank assoziiert.

Zum Beispiel ist der Bezeichner durch einen Eintrag in einer Datenbank, der neben dem Bezeichner einen Verweis zur Identifizierung und/oder Lokalisierung der Ressource umfasst, mit der Ressource assoziiert. Zum Beispiel ist die Datenbank in diesem Fall derart eingerichtet, dass die Datenbank als Antwort auf eine an die Datenbank gerichtete Abfrage mit dem Bezeichner die Ressource oder einen Verweis auf die mit dem Bezeichner assoziierte Ressource ausgibt. Ein Beispiel für einen Verweis zur Identifizierung und/oder Lokalisierung der Ressource ist eine Netzwerkadresse der Ressource, ein Link auf die Ressource oder eine URL (Uniform Ressource Locator) der Ressource.

Es ist jedoch auch denkbar, dass der der Bezeichner zum Beispiel durch einen Eintrag in einer Datenbank, der neben dem Bezeichner die Ressource umfasst, mit der Ressource assoziiert ist. Zum Beispiel ist die Datenbank in diesem Fall derart eingerichtet, dass die Datenbank als Antwort auf eine an die Datenbank gerichtete Abfrage mit dem Bezeichner die mit dem Bezeichner assoziierte Ressource oder ausgibt.

Zum Beispiel wird eine der oben beispielhaft beschriebenen Datenbanken von einem Server (z.B. einem Diensteserver und/oder dem erfindungsgemäßen Server) bereitgestellt, zum Beispiel von einem Server in einem Netzwerk wie dem Internet. Dadurch ist es möglich, dass beliebige internetfähige mobile Geräte wie die erfindungsgemäße mobile Vorrichtung die Ressource in Abhängigkeit des Bezeichners identifizieren und/oder lokalisieren können. Zum Beispiel kann ein entsprechendes mobiles Gerät, wenn es die von den Sendemitteln ausgesendeten Aussendeinformationen empfängt, eine entsprechende Anfrage mit dem von den Aussendeinformationen umfassten Bezeichner der erfindungsgemäßen Vorrichtung über das Internet an die Datenbank richten. Anschließend kann das mobile Gerät beispielsweise über das Internet auf die mit dem Bezeichner assoziierte Ressource zugreifen. Da die Aussendeinformationen nur von mobilen Geräten innerhalb der Sendereichweite der Sendemittel empfangen werden können, ist dies beispielsweise vorteilhaft, um zu gewährleisten, dass zum Beispiel nur Benutzer mit entsprechenden mobilen Geräten, die sich in der durch die Sendereichweite der oben beschriebene Sendemittel begrenzten Umgebung der erfindungsgemäßen Vorrichtung befinden, auf die Ressource zugreifen können.

Es ist jedoch auch denkbar, dass eine der oben beispielhaft beschriebenen Datenbanken von einem mobilen Gerät wie der erfindungsgemäßen mobilen Vorrichtung bereitgestellt wird. Dies ist beispielsweise vorteilhaft, um durch eine lokale Abfrage an eine lokale Datenbank, die Ressource lokalisieren und/oder identifizieren zu können. Eine Netzwerkverbindung wird somit für einen Zugriff auf die Ressource nicht benötigt.

In beispielhaften Ausgestaltungen der Erfindung umfasst die Ressource Positionsinformationen über die Position der Vorrichtung. Unter Positionsinformationen sollen beispielsweise Informationen verstanden werden, die eine Bestimmung der Position der Vorrichtung ermöglichen. Zum Beispiel umfassen die Positionsinformationen eine Positionsangabe über die geographische Position der Vorrichtung. Ein Beispiel für eine solche Positionsangabe ist eine Adresse der Vorrichtung und/oder geographische Koordinaten der Vorrichtung.

Zum Beispiel umfasst eine Positionsdatenbank einen Eintrag mit dem Bezeichner der Vorrichtung und der Positionsinformationen über die Position der Vorrichtung. Zum Beispiel umfasst die Positionsdatenbank für eine Vielzahl von Vorrichtungen jeweils einen Eintrag mit dem Bezeichner der jeweiligen Vorrichtung und der Positionsinformationen über die Position der jeweiligen Vorrichtung. Zum Beispiel ist die Positionsdatenbank derart eingerichtet, dass die Positionsdatenbank als Antwort auf eine an die Datenbank gerichtete Abfrage mit dem Bezeichner der Vorrichtung die mit dem Bezeichner assoziierte Ressource, also die Positionsinformationen über die Position der Vorrichtung ausgibt.

Da die Aussendeinformationen beispielsweise nur von mobilen Geräten wie der erfindungsgemäßen mobilen Vorrichtung innerhalb der Sendereichweite der Sendemittel empfangen werden können, ist dies beispielsweise vorteilhaft, um das Bestimmen der Position des mobilen Geräts durch das mobile Gerät unterstützen zu können.

In beispielhaften Ausgestaltungen der Erfindung umfasst die Ressource vom Ort und/oder der Umgebung der Vorrichtung abhängige Informationen (z.B. sind die von der Ressource umfassten Informationen orts- und/oder umgebungsabhängig).

Von dem Ort der Vorrichtung abhängige Informationen sind beispielweise Informationen, die einen Bezug zum Ort der Vorrichtung haben. Dies können beispielsweise Informationen über einen Gegenstand (z.B. ein Denkmal und/oder ein Gebäude) sein, der sich am Ort der Vorrichtung und/oder in der Nähe der Vorrichtung (z.B. innerhalb der Sendereichweite) befindet.

Von der Umgebung der Vorrichtung abhängige Informationen sind beispielsweise dynamische Informationen, die sich in Abhängigkeit der Umgebung (z.B. der Umwelt) der Vorrichtung verändern. Zum Beispiel kann die Ressource, wie oben beschrieben, in Abhängigkeit von Umgebungsinformationen über die Umgebung der Vorrichtung bereitgestellt werden.

Dies ist beispielsweise vorteilhaft, um ortsabhängige und/oder umgebungsabhängige dynamische Informationen in der Nähe der Vorrichtung (z.B. in der Sendereichweite) verfügbar machen zu können, ohne dass diese Informationen unmittelbar von der Vorrichtung bereitgestellt werden müssen.

In beispielhaften Ausgestaltungen der Erfindung ist die Ressource eine Ressource in einem Netzwerk. Zum Beispiel ist die Ressource in dem Netzwerk durch eine URL identifizierbar und/oder lokalisierbar. Zum Beispiel kann auf die Ressource über das Netzwerk zugegriffen werden.

In beispielhaften Ausgestaltungen der Erfindung ist die Ressource eine Webseite. Zum Beispiel ist die Ressource eine Website in einem lokalen Netzwerk oder einem nichtlokalen Netzwerk wie dem Internet.

In beispielhaften Ausgestaltungen der Erfindung umfasst das dritte erfindungsgemäße Verfahren das Identifizieren und/oder das Lokalisieren der mit dem Bezeichner assoziierten Ressource zumindest teilweise in Abhängigkeit des Bezeichners.

Wie oben beschrieben, kann die Ressource beispielsweise durch eine Anfrage mit dem Bezeichner an eine Datenbank identifiziert und/oder lokalisiert werden. Zum Beispiel ist der Bezeichner durch einen Eintrag in einer Datenbank, der neben dem Bezeichner einen Verweis zur Identifizierung und/oder Lokalisierung der Ressource umfasst, mit der Ressource assoziiert. Zum Beispiel ist die Datenbank in diesem Fall derart eingerichtet, dass die Datenbank als Antwort auf eine an die Datenbank gerichtete Abfrage mit dem Bezeichner einen Verweis auf die mit dem Bezeichner assoziierte Ressource ausgibt. Ein Beispiel für einen Verweis zur Identifizierung und/oder Lokalisierung der Ressource ist eine Netzwerkadresse der Ressource, ein Link auf die Ressource oder eine URL (Uniform Ressource Locator) der Ressource.

Die Ressource kann beispielsweise von einer mobilen Vorrichtung bereitgestellt werden. Zum Beispiel kann die Ressource und/oder die von der Ressource umfassten Informationen, wie oben beschrieben, an der mobile Vorrichtung beispielsweise als Antwort auf eine an eine Datenbank der mobilen Vorrichtung (z.B. eine Positionsdatenbank der mobilen Vorrichtung) gerichtete Anfrage mit dem Bezeichner erhalten werden.
Die Ressource kann, wie oben beschrieben, beispielsweise von dem Server bereitgestellt werden, zum Beispiel in einem Netzwerk bereitgestellt werden. Zum Beispiel kann die Ressource und/oder die von der Ressource umfassten Informationen als Antwort auf eine entsprechende Anfrage für die Ressource an den Server von dem Server erhalten werden (z.B. von dem Server abgerufen, heruntergeladen und/oder empfangen werden). Zum Beispiel können die Ressource und/oder die von der Ressource umfassten Informationen an der erfindungsgemäßen mobilen Vorrichtung über eine Verbindung über ein Netzwerk von dem Server erhalten werden (z.B. von dem Server abgerufen, heruntergeladen und/oder empfangen werden). Das Zugreifen auf eine Ressource kann beispielsweise das Senden einer Anfrage für die Ressource und das Empfangen der Ressource und/oder von von der Ressource umfassten Informationen als Antwort auf die Anfrage umfassen. Ein Beispiel für eine Anfrage ist eine HTTP-GET Anfrage mit der URL der Ressource gemäß dem Hypertext-Übertragungsprotokoll (HTTP, Hypertext Transfer Protocol). Zum Beispiel lokalisiert und/oder identifiziert die URL die Ressource in einem Netzwerk.

Zum Beispiel umfassen die Mittel der mobilen Vorrichtung zur Ausführung und/oder Steuerung der Ausführung der Schritte des dritten erfindungsgemäßen Verfahrens Positionsbestimmungsmittel, wobei die Positionsbestimmungsmittel eingerichtet sind, die Position der mobilen Vorrichtung zumindest teilweise in Abhängigkeit der Aussendeinformationen zu bestimmen. Unter Bestimmen der Position der mobilen Vorrichtung zumindest teilweise in Abhängigkeit der Aussendeinformationen soll zum Beispiel verstanden werden, dass die Position der mobilen Vorrichtung zumindest teilweise in Abhängigkeit von den von der Ressource umfassten Informationen (z.B. Positionsinformationen über die Position der Vorrichtung) bestimmt wird, wobei der von den Aussendeinformationen umfasste Bezeichner mit der Ressource assoziiert ist. Wie oben beschrieben, kann die mit dem Bezeichner der Vorrichtung assoziierte Ressource zum Beispiel Positionsinformationen über die Position der Vorrichtung umfassen. Zum Beispiel lokalisiert und/oder identifiziert der Bezeichner diese Positionsinformationen derart, dass die mobile Vorrichtung auf die Positionsinformationen zugreifen kann. Zum Beispiel wird die Position der mobilen Vorrichtung zumindest teilweise in Abhängigkeit der durch den Bezeichner lokalisierbaren und/oder identifizierbaren Positionsinformationen über die Position der Vorrichtung bestimmt. Zum Beispiel wird die Position der mobilen Vorrichtung dabei derart bestimmt, dass sich die mobile Vorrichtung an der Position der Vorrichtung und/oder in einer Umgebung um die Position der Vorrichtung herum befindet. Die Umgebung ist beispielsweise durch die Sendereichweite der oben beschriebenen Sendemittel der Vorrichtung beschränkt. Da die Aussendeinformationen beispielsweise nur in der Sendereichweite der oben beschriebenen Sendemittel empfangen werden können, kann die Position der mobile Vorrichtung zumindest auf die durch die Sendereichweite der Sendemittel beschränkte Umgebung um die Position der Vorrichtung eingegrenzt werden.

Unter Bestimmen der Position der mobilen Vorrichtung zumindest teilweise in Abhängigkeit der Aussendeinformationen soll zum Beispiel auch verstanden werden, dass die Position der mobilen Vorrichtung zumindest teilweise in Abhängigkeit von einer von den Aussendeinformationen umfassten Signalstärkenangabe bestimmt wird. Wie oben beschrieben, gibt die Signalstärkenangabe beispielsweise die Signalstärke und/oder eine Größenordnung der Signalstärke des Funksignals an, mit dem die Aussendeinformationen ausgesendet werden. Zum Beispiel gibt die Signalstärkenangabe die Signalstärke und/oder eine Größenordnung der Signalstärke des Funksignals in einer von der Vorrichtung vorgegebenen Entfernung an (z.B. in einer Entfernung von 5 m, vorzugsweise 3 m, besonders vorzugsweise 1m). Eine Signalstärkenangabe mit einer Größenordnungsangabe der Signalstärke gibt beispielsweise einen Wertebereich an, in dem sich die Signalstärke befindet. Beispielsweise entspricht die Größenordnungsangabe einem bestimmten Wertebereich (z.B. einem vorgegebenem Wertebereich zwischen einer maximalen und einer minimalen Signalstärke).

Zum Beispiel wird an der mobilen Vorrichtung die Signalstärke und/oder eine Größenordnung der Signalstärke des Funksignals, mit dem die Aussendeinformationen an der mobilen Vorrichtung empfangen werden, bestimmt. Zum Beispiel sind die oben beschriebenen Empfangsmittel der erfindungsgemäßen mobilen Vorrichtung eingerichtet, eine Signalstärke und/oder eine Größenordnung der Signalstärke des Funksignals, mit dem die Aussendeinformationen an der mobilen Vorrichtung empfangen werden, zu bestimmen (z.B. zu messen). Wie oben beschrieben, soll unter der Signalstärke eines Funksignals beispielsweise die Leistung des Funksignals verstanden werden. Die Signalstärkenangabe eines empfangenen Funksignals wird beispielsweise als RSSI (RSSI, Received Signalstrength Indication) bezeichnet (z.B. in einigen Bluetooth-Kommunikationsprotokollen).

Zum Beispiel wird die Position der mobilen Vorrichtung zumindest teilweise in Abhängigkeit von der von den Aussendeinformationen umfassten Signalstärkenangabe und von der bestimmten Signalstärke und/oder der bestimmten Größenordnung der Signalstärke des Funksignals, mit dem die Aussendeinformationen an der mobilen Vorrichtung empfangen werden, bestimmt, wobei die Signalstärke und/oder die Größenordnung der Signalstärke des Funksignals an der mobilen Vorrichtung bestimmt wird (z.B. durch die Empfangsmittel der erfindungsgemäßen mobilen Vorrichtung). Zum Beispiel wird die Entfernung der mobilen Vorrichtung von der Vorrichtung in Abhängigkeit von der von den Aussendeinformationen umfassten Signalstärkenangabe und von der bestimmten Signalstärke und/oder der bestimmten Größenordnung der Signalstärke des Funksignals bestimmt. Beispielsweise wird die Position der mobilen Vorrichtung dabei derart bestimmt, dass sich die mobile Vorrichtung auf einer Position mit einer entsprechenden Entfernung zur Position der Vorrichtung um die Position der Vorrichtung herum befindet. Wenn Funksignale mit Aussendeinformationen von weiteren Vorrichtungen empfangen werden, kann die Position der mobilen Vorrichtung entsprechend weiter eingeschränkt werden.

Das Bestimmen der Position der mobilen Vorrichtung ist beispielsweise vorteilhaft, um die Navigation der mobilen Vorrichtung (z.B. eines Fahrzeugs wie einem selbstfahrenden Fahrzeug) zu unterstützen und/oder zu ermöglichen. Insbesondere ist dies in einem erfindungsgemäßen System wie einem Beleuchtungssystem einer Stadt mit einer Vielzahl von erfindungsgemäßen Vorrichtungen vorteilhaft. Selbstfahrende Fahrzeuge wie beispielsweise Drohnen könnten dann beispielsweise entlang der Vielzahl von erfindungsgemäßen Vorrichtungen navigieren.

Ferner ist das Bestimmen der Position der mobilen Vorrichtung beispielsweise vorteilhaft, um dem Benutzer der mobilen Vorrichtung, auf die Position der mobilen Vorrichtung angepasste dynamische umgebungsabhängige und/oder ortsabhängige Informationen zur Verfügung stellen zu können. Dies können beispielsweise Werbungsinformationen für Uhren sein, wenn sich der Benutzer mit der mobilen Vorrichtung vor einem Uhrengeschäft befindet. Es können aber beispielsweise auch Verkehrsinformationen sein, wenn sich der Benutzer mit der mobilen Vorrichtung auf einer Fahrbahn einer Straße befindet. Es können somit sehr zielgerichtet automatisch Informationen zur Verfügung gestellt werden, die für den Benutzer der mobilen Vorrichtung zumindest mit hoher Wahrscheinlichkeit von Interesse sind, wohingegen andere Informationen, die für den Benutzer der mobilen Vorrichtung zumindest mit hoher Wahrscheinlichkeit nicht von Interesse sind, nicht automatisch zur Verfügung gestellt werden. Dadurch kann beispielsweise die Menge der zur Verfügung zu stellenden Informationen verringert und Übertragungsbandbreite eingespart werden.

In beispielhaften Ausgestaltungen der Erfindung ist die erfindungsgemäße Vorrichtung Teil einer Vorrichtung zum Steuern eines Leuchtmittels einer Lampe im Außenbereich, insbesondere einer Straßenlampe. Eine solche Vorrichtung zum Steuern eines Leuchtmittels einer Lampe im Außenbereich ist beispielsweise in der Patentanmeldung mit dem Aktenzeichen DE 10 2014 102 678.0 beschrieben, auf die hier ausdrücklich Bezug genommen wird. Ferner ist eine solche Vorrichtung beispielsweise ein von dem Unternehmen ICE Gateway unter dem Produktnamen ICE Gateway hergestellte Vorrichtung.

Zum Beispiel umfasst das erste erfindungsgemäße Verfahren ferner das Steuern einer oder mehrerer mit der Vorrichtung verbundenen Leuchtmittel. Zum Beispiel umfasst die erfindungsgemäße Vorrichtung Verarbeitungsmittel, wobei die Verarbeitungsmittel eingerichtet sind, eine oder mehrere mit der Vorrichtung verbundene Leuchtmittel zu steuern. Zum Beispiel umfasst die erfindungsgemäße Vorrichtung, wie oben beschrieben, zumindest einen Prozessor und einen Speicher mit Programmanweisungen, wobei der Speicher und die Programmanweisungen beispielsweise eingerichtet sind, um, zusammen mit dem zumindest einen Prozessor, die erfindungsgemäße Vorrichtung zu veranlassen, eine oder mehrere mit der erfindungsgemäßen Vorrichtung verbundene Leuchtmittel zu steuern.

Unter Steuern eines Leuchtmittels (z.B. eines mit der Vorrichtung verbundenen Leuchtmittels) soll zum Beispiel das Anschalten, Ausschalten und/oder Dimmen des Leuchtmittels verstanden werden.

Zum Beispiel umfasst die erfindungsgemäße Vorrichtung ferner ein oder mehrere Energieversorgungsmittel. Zum Beispiel sind die Energieversorgungsmittel eingerichtet, mit den Leuchtmitteln verbunden zu werden und die Leuchtmittel mit Energie zu versorgen und/oder Leistung zum Betreiben der Leuchtmittel bereitzustellen. Zum Beispiel werden die Leuchtmittel gesteuert, indem die Energieversorgungsmittel gesteuert werden. Zum Beispiel umfassen die Energieversorgungsmittel einen Stromrichter, eine steuerbare Treiberschaltung und/oder einen steuerbaren Spannungswandler (z.B. einen steuerbaren Gleichspannungswandler).

Zum Beispiel werden die Leuchtmittel zumindest teilweise in Abhängigkeit der Umgebungsinformationen gesteuert. Beispielsweise werden die Leuchtmittel bei bestimmten Umgebungsinformationen eingeschaltet oder hochgedimmt (z.B. bei geringer Umgebungshelligkeit) und bei anderen Umgebungsinformationen ausgeschaltet oder runtergedimmt (z.B. bei hoher Umgebungshelligkeit). Wie oben beschrieben, können die Umgebungsinformationen verarbeitet werden. Zum Beispiel werden die Leuchtmittel zumindest teilweise abhängig vom Ergebnis dieser Verarbeitung gesteuert.

Dadurch wird beispielsweise eine Vorrichtung zum Steuern eines Leuchtmittels mit weiteren Funktionen, wie dem Aussenden der Aussendeinformationen, bereitgestellt. Dies ist beispielsweise vorteilhaft, da für das Vorsehen der weiteren Funktionen beispielsweise kein zusätzlicher Installationsaufwand betrieben werden muss und auf die bereits vorhandenen Mittel der Vorrichtung zum Steuern des Leuchtmittels zurückgegriffen werden kann. Beispielsweise muss kein zusätzlicher Sensor für die weitere Funktion (z.B. zum Erfassen der Umgebungsinformationen) vorgesehen werden. Auch sind solche Vorrichtungen zum Steuern eines Leuchtmittels typischerweise Teil eines Beleuchtungssystems (z.B. eines Beleuchtungssystems einer Stadt), das eine Vielzahl von Vorrichtungen zum Steuern eines Leuchtmittels umfasst, so dass dadurch ein großer öffentlicher Bereich abgedeckt werden kann.

In beispielhaften Ausgestaltungen der Erfindung ist die erfindungsgemäße Vorrichtung an oder in einer Lampe im Außenbereich, insbesondere einer Straßenlampe, anordenbar oder angeordnet. Zum Beispiel ist die erfindungsgemäße Vorrichtung Teil einer Beleuchtungsvorrichtung wie einer Lampe, zum Beispiel einer Lampe im Außenbereich, insbesondere einer Straßenlampe.

Unter angeordnet an oder in einer Lampe im Außenbereich soll beispielsweise verstanden werden, dass die erfindungsgemäße Vorrichtung innerhalb der Lampe (z.B. im Lampenkopf oder im Mast) und/oder an dem Gehäuse der Lampe (z.B. am Lampenkopf und/oder am Mast) angebracht ist. Zum Beispiel ist die erfindungsgemäße Vorrichtung in der Leuchte, auf bzw. an der Leuchte, in der Laterne und/oder an der Laterne angeordnet.

Dies ist beispielsweise vorteilhaft, da Lampen im Außenbereich eine stationäre geographische Position haben und somit an dieser stationären geographischen Position durch die Erfindung ortsbezogene und dynamische Informationen verfügbar gemacht werden können.

In beispielhaften Ausgestaltungen der Erfindung ist die erfindungsgemäße Vorrichtung Teil eines Gateways für den Außenbereich wie einem Outdoor Gateway.

In beispielhaften Ausgestaltungen der Erfindung ist die erfindungsgemäße Vorrichtung Teil einer Steuerung für den Außenbereich.

In beispielhaften Ausgestaltungen der Erfindung umfassen die Aussendeinformationen neben dem Bezeichner der Vorrichtung noch weitere Informationen und/oder Angaben. Zum Beispiel umfassen die Aussendeinformationen lokale Informationen, die mit einer hohen Wahrscheinlichkeit für alle Empfänger oder zumindest einen großen Teil der Empfänger (z.B. mobilen Geräten und/oder Benutzergeräten wie Mobiltelefonen und/oder der erfindungsgemäßen mobilen Vorrichtung), die sich in Sendereichweite der Sendemittel befinden und die über entsprechende Empfangsmittel verfügen, empfangen werden können, von Interesse sind.

An einem Bahnhof können lokale Informationen beispielsweise Abfahrts-, Ankunfts- und/oder Verspätungsinformationen sein. An einem Flughafen können lokale Informationen beispielsweise Abflug-, Anklunfts- und/oder Verspätungsinformationen sein. Die lokalen Informationen können beispielsweise auch Gefahreninformationen sein, z.B. Informationen über einen Brand, ein Verbrechen und/oder einen Unfall in der Umgebung der Vorrichtung. Es ist beispielsweise auch denkbar, dass die lokalen Informationen Umgebungskarteninformationen sind, z.B. Informationen über eine Karte und/oder eine Repräsentation einer Karte der Umgebung der Vorrichtung (z.B. ein Firmen- und/oder Veranstaltungsgelände).

Diese Ausgestaltung ist beispielsweise vorteilhaft, um allen Empfängern in der Sendereichweite der Sendemittel der Vorrichtung (gleichzeitig) lokale Informationen zur Verfügung zu stellen, ohne dass die Empfänger diese Informationen gezielt abfragen müssen.

Zum Beispiel ist die externe Vorrichtung eine Vorrichtung zum Steuern eines Leuchtmittels einer Lampe im Außenbereich, ein Kioskterminal (z.B. ein Informationsterminal und/oder ein Selbstbedienungsterminal), ein Panel (z.B. ein digitales Panel) und/oder eine Anzeige (z.B. ein digitale und/oder fernsteuerbare Anzeige wie eine digitale und/oder fernsteuerbare Informationsanzeige, eine digitale und/oder fernsteuerbare Werbeanzeige, eine digitale und/oder fernsteuerbare Verkehrsanzeige und/oder ein digitales und/oder fernsteuerbares Verkehrszeichen). Die vorliegende Erfindung unterstützt eine Vielzahl von Anwendungen im Internet of Everything (IoE) und im Bereich Infrastructur as a Service (laaS).

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Zeichnungen

In den Figuren zeigen:
- Fig. 1a:: ein Blockdiagramm einer beispielhaften Ausführungsform der erfindungsgemäßen Vorrichtung;
- Fig. 1b:: ein Blockdiagramm einer beispielhaften Ausführungsform der erfindungsgemäßen mobilen Vorrichtung;
- Fig. 1c:: ein Blockdiagramm einer beispielhaften Ausführungsform des erfindungsgemäßen Servers;
- Fig. 2:: ein Blockdiagramm einer beispielhaften Ausführungsform des erfindungsgemäßen Systems;
- Fig. 3:: ein Ablaufdiagramm mit Schritten einer beispielhaften Ausführungsform des ersten erfindungsgemäßen Verfahrens;
- Fig. 4:: ein Ablaufdiagramm mit Schritten einer beispielhaften Ausführungsform des zweiten erfindungsgemäßen Verfahrens; und
- Fig. 5a und b:: Ablaufdiagramme mit Schritten beispielhafter Ausführungsformen des dritten Verfahrens.

### Detaillierte Beschreibung einiger beispielhafter Ausführungsformen der vorliegenden Erfindung

Die vorliegende Erfindung wird im Folgenden anhand von beispielhaften Ausführungsformen beschrieben. Der Umfang der Erfindung wird jedoch ausschließlich durch den Gegenstand der unabhängigen Ansprüche definiert.

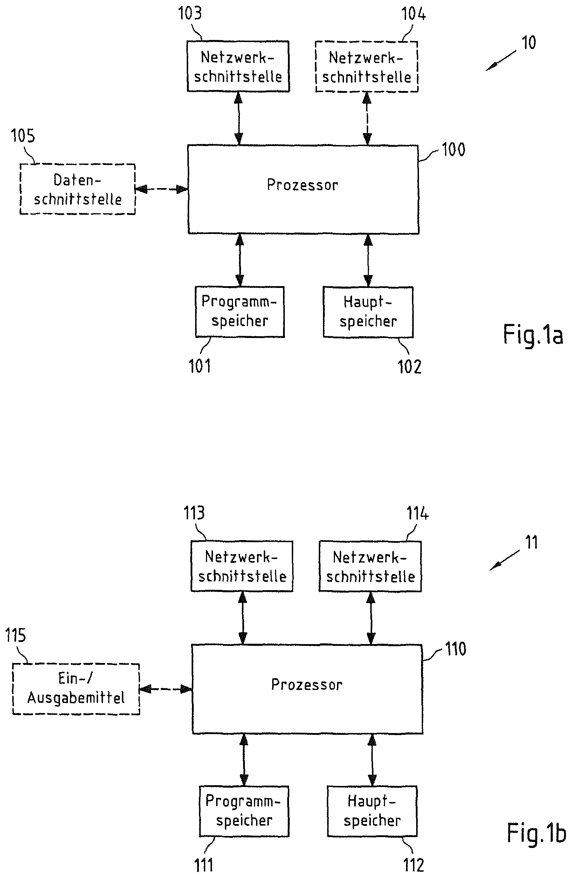

Fig. 1a zeigt ein Blockdiagramm einer beispielhaften Ausführungsform der erfindungsgemäßen Vorrichtung 10.
Die erfindungsgemäße Vorrichtung 10 umfasst einen Prozessor 100, einen Programmspeicher 101, einen Hauptspeicher 102, eine erste Netzwerkschnittstelle 103, eine optionale zweite Netzwerkschnittstelle 104 und eine optionale Datenschnittstelle 105.

Ein Beispiel für einen Prozessor ist ein Universalprozessor, ein Mikroprozessor, eine Mikrokontrolleinheit wie ein Mikrokontroller, ein digitaler Signalprozessor (DSP), eine anwendungsspezifische Integrierte Schaltung (ASIC), ein Field Programmable Gate Array (FPGA) und ein Prozessor mit einem anwendungsspezifischem Befehlssatz (ASIP).

Der Prozessor 100 der erfindungsgemäßen Vorrichtung 10 führt beispielsweise Programmanweisungen eines im Programmspeicher 101 gespeicherten Programms aus und speichert Zwischenergebnisse und ähnliches im Hauptspeicher 102. Zum Beispiel ist in dem Programmspeicher 101 ein erfindungsgemäßes Computerprogramm gespeichert.

Eine Netzwerkschnittstelle umfasst beispielsweise eine Netzwerkkarte, eine Antenne, ein Netzwerkmodul und/oder ein Modem und ist beispielsweise eingerichtet, um Informationen (z.B. Daten) gemäß einem Kommunikationsprotokoll zu senden und/oder zu empfangen (z.B. über ein Netzwerk zu senden und/oder zu empfangen).

Zum Beispiel steuert der Prozessor 100 der erfindungsgemäßen Vorrichtung 10 die erste Netzwerkschnittstelle 103 und die optionale zweite Netzwerkschnittstelle 104, wobei die Steuerung der Netzwerkschnittstellen beispielsweise durch Programmanweisungen eines Programms (z.B. des erfindungsgemäßen Computerprogramms) ermöglicht wird, das im Programmspeicher 101 gespeichert ist.

Die erste Netzwerkschnittstelle 103 kann beispielsweise Informationen (z.B. Daten) gemäß einem ersten Kommunikationsprotokoll empfangen und an den Prozessor 100 weiterleiten und/oder Informationen von dem Prozessor 100 empfangen und gemäß dem ersten Kommunikationsprotokoll senden. Die optionale zweite Netzwerkschnittstelle 104 kann beispielsweise Informationen gemäß einem zweiten Kommunikationsprotokoll empfangen und an den Prozessor 100 weiterleiten und/oder Informationen von dem Prozessor 100 empfangen und gemäß dem zweiten Kommunikationsprotokoll senden.

Die erste Netzwerkschnittstelle 103 ist beispielsweise eingerichtet, ein Funksignal gemäß dem ersten Kommunikationsprotokoll mit einer begrenzten Sendereichweite auszusenden. Das erste Kommunikationsprotokoll ist beispielsweise ein Bluetooth-Kommunikationsprotokoll und das zweite Kommunikationsprotokoll ist beispielsweise ein Mobilfunk-Kommunikationsprotokoll (z.B. ein GSM-, UMTS- und/oder LTE-Kommunikationsprotokoll).

Ein Beispiel für eine Datenschnittstelle ist eine USB-Schnittstelle, eine IEEE 1394-Schnittstelle, eine CAN-Bus-Schnittstelle, eine Zigbee-Schnittstelle, eine Bluetooth-Schnittstelle, eine serielle Schnittstelle wie eine R232-Schnittstelle und/oder eine parallele Schnittstelle wie eine IEEE 1284-Schnittstelle.

Zum Beispiel ist die optionale Datenschnittstelle 105 eine drahtgebundene Datenschnittstelle. Zum Beispiel steuert der Prozessor 100 die optionale Datenschnittstelle 105. Die optionale Datenschnittstelle 105 kann beispielsweise Informationen von zumindest einem mit der Datenschnittstelle 105 verbundenen Sensor empfangen und an den Prozessor 100 weiterleiten und/oder Informationen von dem Prozessor 100 empfangen und an den zumindest einen mit der Datenschnittstelle 105 verbundenen Sensor weiterleiten.

Zum Beispiel sind der Prozessor 100, der Programmspeicher 101, der Hauptspeicher 102, die erste Netzwerkschnittstelle 103, die optionale zweite Netzwerkschnittstelle 104 und die optionale Datenschnittstelle 105 zumindest teilweise Teil eines Hardwaremoduls. Beispielsweise sind zumindest der Prozessor 100, der Programmspeicher 101, der Hauptspeicher 102 und die erste Netzwerkschnittstelle 103 zumindest teilweise Teile eines solchen Hardwaremoduls. Ein Hardwaremodul ist beispielsweise eingerichtet, eine oder mehrere Logikfunktionen auszuführen. Die Logikfunktionen können in einem einmal-programmierbaren Hardwaremodul (unveränderlich) festverdrahtet bzw. festeinprogrammiert sein. Die Logikfunktionen können in einem programmierbaren Hardwaremodul (veränderlich) einprogrammiert sein (z.B. per Firmware und/oder Software). Ein Hardwaremodul ist beispielsweise eine elektronische Schaltung, ein Prozessor und/oder eine programmierbare logische Schaltung (PLD).
Der zumindest eine mit der optionalen Datenschnittstelle 105 verbundene Sensor kann beispielsweise Umgebungsinformationen über die Umgebung der Vorrichtung 10 erfassen und an die Datenschnittstelle 105 senden. Zum Beispiel ist der zumindest eine Sensor ein Temperatursensor.
Die Vorrichtung 10 ist zum Beispiel eine Vorrichtung zum Steuern eines Leuchtmittels im Außenbereich. Die Vorrichtung 10 ist zum Beispiel eine Vorrichtung zum Steuern eines Leuchtmittels in einer Straßenlampe. Beispielsweise wird die Vorrichtung 10 zum Um- oder Nachrüsten von Straßenlampen mit einer herkömmlichen Lampe auf eine LED-Lampe verwendet. Zum Beispiel wird die Vorrichtung 10 in Straßenlampen verwendet.
Fig. 1b zeigt ein Blockdiagramm einer beispielhaften Ausführungsform der mobilen Vorrichtung 11.
Die mobile Vorrichtung 11 umfasst einen Prozessor 110, einen Programmspeicher 111, einen Hauptspeicher 112, eine erste Netzwerkschnittstelle 113, eine zweite Netzwerkschnittstelle 114 und optionale Ein-/Ausgabemittel 115. Die mobile Vorrichtung 11 ist zum Beispiel ein mobiles Benutzergerät wie ein Mobiltelefon (z.B. ein Smartphone).
Der Prozessor 110 der mobilen Vorrichtung 11 führt beispielsweise Programmanweisungen eines im Programmspeicher 111 gespeicherten Programms aus und speichert Zwischenergebnisse und ähnliches im Hauptspeicher 112. Zum Beispiel ist in dem Programmspeicher 111 ein erfindungsgemäßes Computerprogramm gespeichert.

Zum Beispiel steuert der Prozessor 110 des Benutzergeräts 11 die erste Netzwerkschnittstelle 113, die zweite Netzwerkschnittstelle 114 und die optionalen Ein-/Ausgabemittel 115, wobei die Steuerung beispielsweise durch Programmanweisungen eines Programms (z.B. des erfindungsgemäßen Computerprogramms) ermöglicht wird, das im Programmspeicher gespeichert ist.

Die erste Netzwerkschnittstelle 113 kann beispielsweise Informationen (z.B. Daten) gemäß dem ersten Kommunikationsprotokoll empfangen und an den Prozessor 110 weiterleiten und/oder Informationen von dem Prozessor 110 empfangen und gemäß dem ersten Kommunikationsprotokoll senden. Die zweite Netzwerkschnittstelle 114 kann beispielsweise Informationen gemäß einem zweiten Kommunikationsprotokoll empfangen und an den Prozessor 110 weiterleiten und/oder Informationen von dem Prozessor 110 empfangen und gemäß dem zweiten Kommunikationsprotokoll senden. Das erste Kommunikationsprotokoll ist beispielsweise ein Bluetooth-Kommunikationsprotokoll und das zweite Kommunikationsprotokoll ist beispielsweise ein Mobilfunk-Kommunikationsprotokoll (z.B. ein GSM-, UMTS- und/oder LTE-Kommunikationsprotokoll).

Ein Beispiel für ein Ein-/Ausgabemittel ist eine (numerische oder alpha-numerische) Tastatur, eine Maus, eine Bildschirm, ein berührungsempfindlicher Bildschirm, ein Lautsprecher und/oder ein Mikrofon.
Die optionalen Ein-/Ausgabemittel 115 können beispielsweise von einem Benutzer der mobilen Vorrichtung 11 eingegebene Informationen empfangen und an den Prozessor 110 weiterleiten und/oder Informationen von dem Prozessor 110 empfangen und an einen Benutzer der mobilen Vorrichtung 11 ausgeben.

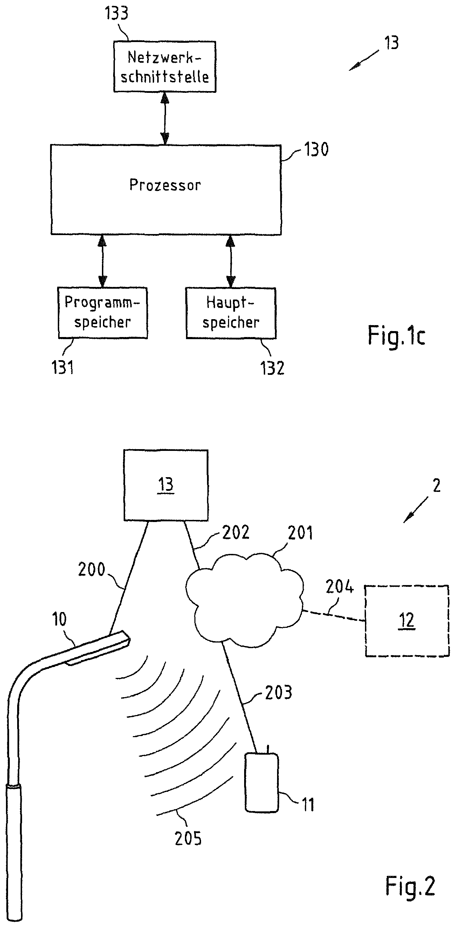

Fig. 1c zeigt ein Blockdiagramm einer beispielhaften Ausführungsform des erfindungsgemäßen Servers 13.

Der erfindungsgemäße Server 13 umfasst beispielsweise einen Prozessor 130, einen Programmspeicher 131, einen Hauptspeicher 132 und eine Netzwerkschnittstelle 133.
Der Prozessor 130 des erfindungsgemäßen Servers 13 führt beispielsweise Programmanweisungen eines im Programmspeicher 131 gespeicherten Programms aus und speichert Zwischenergebnisse und ähnliches im Hauptspeicher 132. Zum Beispiel ist in dem Programmspeicher 131 ein erfindungsgemäßes Computerprogramm gespeichert.
Zum Beispiel steuert der Prozessor 131 des erfindungsgemäßen Servers 13 die Netzwerkschnittstelle 133, wobei die Steuerung der Netzwerkschnittstelle 133 beispielsweise durch Programmanweisungen eines Programms (z.B. des erfindungsgemäßen Computerprogramms) ermöglicht wird, das im Programmspeicher 131 gespeichert ist.
Die Netzwerkschnittstelle 133 kann beispielsweise Informationen (z.B. Daten) über ein Netzwerk (z.B. das Internet) empfangen und an den Prozessor 110 weiterleiten und/oder Informationen von dem Prozessor 110 empfangen und über das Netzwerk senden.
Fig. 2 zeigt ein Blockdiagramm einer beispielhaften Ausführungsform des erfindungsgemäßen Systems 2. Das System 2 umfasst beispielsweise die erfindungsgemäße Vorrichtung 10, die mobile Vorrichtung 11, einen optionalen Server 12 und den erfindungsgemäßen Server 13. Der Aufbau des optionalen Servers 12 entspricht beispielsweise dem in Fig. 1c gezeigten Aufbau des erfindungsgemäßen Servers 13.

Wie in Fig. 2 dargestellt, ist die erfindungsgemäße Vorrichtung 10 an oder in einer Straßenlampe angeordnet. Zum Beispiel ist die erfindungsgemäße Vorrichtung ein Teil einer Vorrichtung zum Steuern eines Leuchtmittels der Straßenlampe.

Die Vorrichtung 10 ist über eine Verbindung 200 mit dem Server 13 verbunden. Die Verbindung 200 ist beispielsweise eine Verbindung in einem privaten Netzwerk (z.B. eine Verbindung über ein virtuelles privates Netzwerk, VPN). Es ist beispielsweise denkbar, dass die Verbindung 200 eine Verbindung über das Netzwerk 201 (z.B. das Internet) ist. Zum Beispiel besteht die Verbindung 200 zwischen der zweiten Netzwerkschnittstelle 104 der Vorrichtung 10 und der Netzwerkschnittstelle 133 des Servers 13, beispielsweise stellen diese Netzwerkschnittstellen die Verbindung 200 bereit. Zum Beispiel ist die Verbindung 200 zumindest teilweise eine drahtlose Verbindung und/oder zumindest teilweise eine drahtgebundene Verbindung.

Der Server 13 ist über eine Verbindung 202 mit dem Netzwerk 201 verbunden,die mobile Vorrichtung 11 ist über eine Verbindung 203 mit dem Netzwerk 201 verbunden, und der optionale Server 12 ist über eine Verbindung 204 mit dem Netzwerk 201 verbunden. Die Verbindungen 202, 203 und 204 sind beispielsweise zumindest teilweise drahtlose Verbindungen und/oder zumindest teilweise drahtgebundene Verbindungen. Die Verbindungen 202, 203 und 204 werden beispielsweise von den jeweiligen Netzwerkschnittstellen (z.B. unter anderem den Netzwerkschnittstellen 113 und 133) bereitgestellt.

Das Netzwerk 201 ist beispielsweise ein Weitverkehrsnetzwerk (WAN, Wide Area Network) oder ein globales Netzwerk (GAN, Global Area Network) wie das Internet.

Mobile Vorrichtung 11 befindet sich, wie in Fig. 2 schematisch gezeigt, innerhalb der Sendereichweite eines von der ersten Netzwerkschnittstelle 103 der Vorrichtung 10 ausgesendeten Funksignals 205.

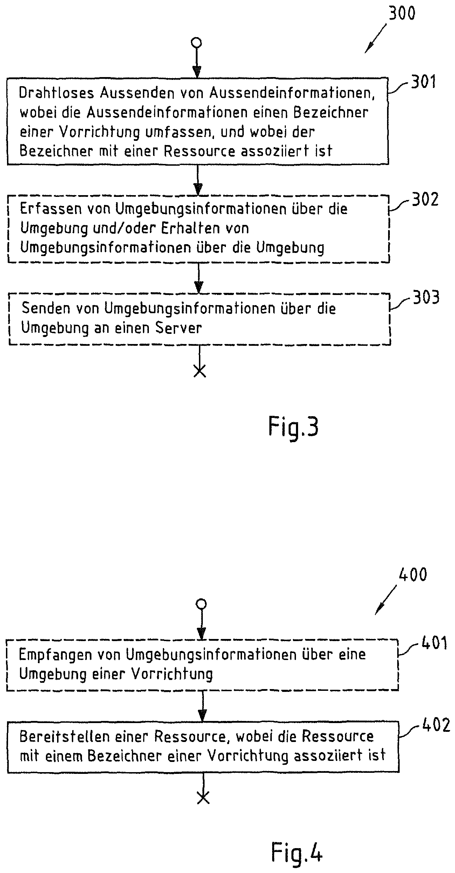

Fig. 3 zeigt ein Ablaufdiagramm 300 mit Schritten einer beispielhaften Ausführungsform des ersten erfindungsgemäßen Verfahrens, die durch die Mittel der erfindungsgemäßen Vorrichtung 10 ausgeführt und/oder gesteuert werden.

In einem Schritt 301 werden Aussendeinformationen drahtlos ausgesendet, wobei die Aussendeinformationen einen Bezeichner einer Vorrichtung umfassen, und wobei der Bezeichner mit einer Ressource assoziiert ist. Zum Beispiel werden die Aussendeinformationen in Schritt 301 von der ersten Netzwerkschnittstelle 103 der Vorrichtung 10 in Form des Funksignals 205 (z.B. eines Bluetooth-Signals) ausgesendet.

Zum Beispiel umfassen die Aussendeinformationen optional eine Signalstärkenangabe, wobei die Signalstärkenangabe von einer Signalstärke des Funksignals 205 abhängt. Zum Beispiel wird das Funksignal 205 mit einer konstanten Signalstärke ausgesendet. Zum Beispiel gibt die Signalstärkenangabe, wie oben beschrieben, die Signalstärke und/oder eine Größenordnung der Signalstärke des Funksignals 205 an, mit dem die Aussendeinformationen ausgesendet werden. Zum Beispiel gibt die Signalstärkenangabe die Signalstärke und/oder eine Größenordnung der Signalstärke des Funksignals 205 in einer von der Vorrichtung 10 vorgegebenen Entfernung an (z.B. in einer Entfernung von 5 m, vorzugsweise 3 m, besonders vorzugsweise 1m). Unter der Signalstärke des Funksignals 205 soll beispielsweise die Leistung des Funksignals 205 (z.B. die Sende- und/oder die Empfangsleistung des Funksignals) verstanden werden.

Die Aussendeinformationen umfassen beispielsweise einen eindeutigen Bezeichner der Vorrichtung 10 wie einen Universally Unique Identifier.

Der Bezeichner ist beispielsweise durch einen Eintrag in einer Datenbank mit der Ressource assoziiert. Zum Beispiel enthält ein Eintrag in der Datenbank neben dem Bezeichner die Ressource und/oder einen Verweis auf die Ressource.

Zum Beispiel ist die Datenbank eine Positionsdatenbank, die in einem Eintrag neben dem Bezeichner der Vorrichtung 10 Positionsinformationen über die Position der Vorrichtung 10 umfasst. Zum Beispiel umfasst die Positionsdatenbank für eine Vielzahl von Vorrichtungen jeweils einen Eintrag mit dem Bezeichner der Vorrichtung und der Positionsinformationen über die Position der Vorrichtung.

Zum Beispiel ist die Datenbank eine Verweisdatenbank, die in einem Eintrag neben dem Bezeichner der Vorrichtung 10 einen Verweis auf die mit dem Bezeichner der Vorrichtung assoziierte Ressource umfasst. Zum Beispiel umfasst die Verweisdatenbank für eine Vielzahl von Vorrichtungen jeweils einen Eintrag mit dem Bezeichner der Vorrichtung und einen Verweis auf die mit dem Bezeichner der Vorrichtung assoziierte Ressource.

Die Datenbank ist beispielsweise zusammen mit einem Datenbankprogramm im Programmspeicher 111 der mobilen Vorrichtung 11, im Programmspeicher 113 des Servers 13 und/oder im Programmspeicher des optionalen Servers 12 gespeichert und wird von der mobilen Vorrichtung 11, dem Server 13 und/oder dem optionalen Server 12 bereitgestellt. Das Datenbankprogramm enthält beispielsweise Programmanweisungen, die eine Vorrichtung zum Bereitstellen der Datenbank veranlassen, wenn das Datenbankprogramm von einem oder mehreren Prozessoren der Vorrichtung ausgeführt wird.

In einem optionalen Schritt 302 werden Umgebungsinformationen über die Umgebung erfasst und/oder Umgebungsinformationen über die Umgebung erhalten.

Zum Beispiel erfasst in Schritt 302 zumindest ein mit der optionalen Datenschnittstelle 105 verbundener Sensor Umgebungsinformationen über die Umgebung der Vorrichtung 10. Zum Beispiel leitet der zumindest eine Sensor die Umgebungsinformationen an die Datenschnittstelle 105 weiter, so dass die Umgebungsinformationen in Schritt 302 über die Datenschnittstelle 105 an der Vorrichtung 10 erhalten werden.

Beispiele für Umgebungsinformationen über die Umgebung der Vorrichtung 10 sind Temperaturinformationen, Helligkeitsinformationen, Bewegungsinformationen, Schallinformationen, Audioinformationen, Bildinformationen, Videoinformationen und/oder Erschütterungsinformationen.

Es ist zum Beispiel denkbar, dass die von dem zumindest einen Sensor erfassten und an der Vorrichtung 10 erhaltenen Umgebungsinformationen optional zumindest teilweise durch den Prozessor 100 der Vorrichtung 10 verarbeitet werden. Zum Beispiel umfasst der Programmspeicher 101 der Vorrichtung 10 Programmanweisungen, wobei der Programmspeicher und die Programmanweisungen jeweils eingerichtet sind, um, zusammen mit dem Prozessor 100, den Prozessor 100 zu veranlassen, die Umgebungsinformationen zu verarbeiten (z.B. einen Verarbeitungsalgorithmus wie einen Komprimierungs-, Aufbereitungs- und/oder Auswertungsalgorithmus auf die Umgebungsinformationen anzuwenden). Es ist jedoch auch denkbar, dass die an der Vorrichtung 10 erhaltenen Umgebungsinformationen nicht verarbeitet werden.

In einem optionalen Schritt 303 werden Umgebungsinformationen über die Umgebung an den Server 13 gesendet.

Zum Beispiel werden in Schritt 303 Umgebungsinformationen über die Umgebung der Vorrichtung 10 von der zweiten optionalen Netzwerkschnittstelle 104 der Vorrichtung 10 an den Server 13 gesendet. Beispielsweise werden in Schritt 303 Umgebungsinformationen über die Umgebung der Vorrichtung 10 von der zweiten optionalen Netzwerkschnittstelle 104 der Vorrichtung 10 über die Verbindung 200 an den Server 13 gesendet.

Die in Schritt 303 an den Server gesendeten Umgebungsinformationen beruhen beispielsweise zumindest teilweise auf den in Schritt 302 erfassten und/oder erhaltenen Umgebungsinformationen. Zum Beispiel werden in Schritt 303 die in Schritt 302 erfassten und/oder erhaltenen Umgebungsinformationen zumindest teilweise an den Server gesendet. Es ist jedoch beispielsweise auch denkbar, dass in Schritt 303 zumindest teilweise die in Schritt 302 optional verarbeiteten Umgebungsinformationen (z.B. komprimierte, aufbereitete und/oder ausgewertete Umgebungsinformationen) an den Server 13 gesendet werden.

Fig. 4 zeigt ein Ablaufdiagramm 400 mit Schritten einer beispielhaften Ausführungsform des zweiten erfindungsgemäßen Verfahrens, die durch die Mittel des erfindungsgemäßen Servers 13 ausgeführt und/oder gesteuert werden.

In einem optionalen Schritt 401 werden Umgebungsinformationen über eine Umgebung der Vorrichtung 10 an dem Server 13 empfangen.

Zum Beispiel werden in Schritt 401 Umgebungsinformationen über die Umgebung der Vorrichtung 10 von der Netzwerkschnittstelle 133 des Servers 13 von der Vorrichtung 10 empfangen. Beispielsweise werden in Schritt 401 Umgebungsinformationen über die Umgebung der Vorrichtung 10 von der Netzwerkschnittstelle 133 des Servers 13 über die Verbindung 200 von der Vorrichtung 10 empfangen. Zum Beispiel entsprechen die in Schritt 401 empfangenen Umgebungsinformationen den in Schritt 303 des Ablaufdiagramms 300 gesendeten Umgebungsinformationen.

In einem Schritt 402 wird eine Ressource bereitgestellt, wobei die Ressource mit einem Bezeichner der Vorrichtung 10 assoziiert ist.

Zum Beispiel wird die Ressource in Schritt 402 zumindest teilweise in Abhängigkeit von den im optionalen Schritt 401 empfangenen Umgebungsinformationen bereitgestellt. Zum Beispiel passt der erfindungsgemäße Server 13 die Ressource zumindest teilweise in Abhängigkeit der Umgebungsinformationen an. Zum Beispiel umfasst die Ressource, wenn hohe Temperaturen (z.B. über 20 ° Celsius) in der Umgebung der Vorrichtung 10 erfasst werden, andere Informationen, als wenn niedrige Temperaturen (z.B. unter 20 ° Celsius) in der Umgebung der Vorrichtung 10 erfasst werden.
Die Ressource ist beispielsweise eine Webseite und wird von dem Server 13 derart bereitgestellt, dass auf die Ressource und/oder die von der Ressource umfassten Informationen über das Netzwerk 201 zugegriffen werden kann. Zum Beispiel wird die Webseite von dem Server 13 in Schritt 402 derart bereitgestellt, dass die mobile Vorrichtung 11 auf die Ressource und/oder die von der Ressource umfassten Informationen über die Verbindung 203, das Netzwerk 201 und die Verbindung 202 zugreifen kann. Zum Beispiel ist die Ressource in dem Netzwerk 201 durch eine URL lokalisierbar und/oder identifizierbar.
Zum Beispiel wird in Schritt 402 eine Anfrage für die Ressource (z.B. eine HTTP-GET Anfrage mit der URL der Ressource) an der Netzwerkschnittstelle 133 über die Verbindung 202, das Netzwerk 201 und die Verbindung 203 von der Vorrichtung 11 empfangen. Zum Beispiel sendet die Netzwerkschnittstelle 133 als Antwort auf die Anfrage für die Ressource die Ressource und/oder von der Ressource umfasste Informationen über die Verbindung 202, das Netzwerk 201 und die Verbindung 203 an die mobile Vorrichtung 11.

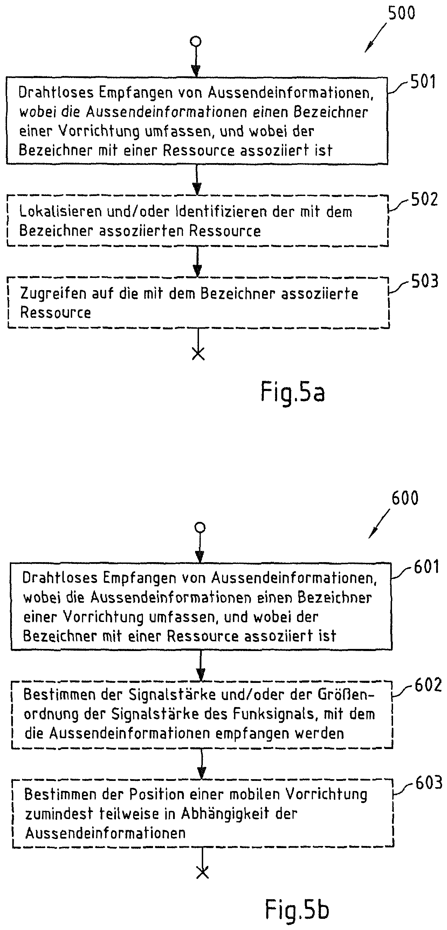

Fig. 5a zeigt ein Ablaufdiagramm 500 mit Schritten einer beispielhaften Ausführungsform des dritten Verfahrens, die durch die Mittel der mobilen Vorrichtung 11 ausgeführt und/oder gesteuert werden . In einem Schritt 501 werden Aussendeinformationen drahtlos empfangen, wobei die Aussendeinformationen einen Bezeichner der Vorrichtung 10 umfassen, und wobei der Bezeichner mit einer Ressource assoziiert ist. Zum Beispiel werden die Aussendeinformationen in Schritt 501 von der ersten Netzwerkschnittstelle 113 der Vorrichtung 11 in Form des Funksignals 205 (z.B. eines Bluetooth-Signals) empfangen.

Zum Beispiel werden in Schritt 501 die in Schritt 301 des Ablaufdiagramms 300 ausgesendeten Aussendeinformationen drahtlos empfangen.

In einem optionalen Schritt 502 wird die mit dem Bezeichner assoziierte Ressource lokalisiert und/oder identifiziert.

Wie oben beschrieben, ist die Ressource beispielsweise durch einen Eintrag in einer Datenbank mit dem Bezeichner assoziiert. Beispielsweise kann die Ressource in Schritt 502 durch eine Anfrage mit dem Bezeichner an eine Datenbank identifiziert und/oder lokalisiert werden. Zum Beispiel ist die Datenbank derart eingerichtet, dass die Datenbank als Antwort auf eine an die Datenbank gerichtete Abfrage mit dem Bezeichner einen Verweis auf die mit dem Bezeichner assoziierte Ressource ausgibt.

Zum Beispiel wird die Datenbank von dem optionalen Server 12 bereitgestellt. Es ist jedoch beispielsweise auch denkbar, dass die Datenbank von dem Server 13 bereitgestellt wird. Wenn die Datenbank von dem optionalen Server 12 bereitgestellt wird, sendet die zweite Netzwerkschnittstelle 114 in Schritt 502 beispielsweise eine Anfrage mit dem Bezeichner an den Server 12 bzw. die von dem Server 12 bereitgestellte Datenbank. Zum Beispiel wird die Anfrage mit dem Bezeichner in Schritt 502 über die Verbindung 203, das Netzwerk 201 und die Verbindung 204 gesendet. Beispielsweise empfängt die Netzwerkschnittstelle 114 in Schritt 502 als Antwort auf die Anfrage mit dem Bezeichner von dem Server 12 bzw. von der von dem Server 12 bereitgestellten Datenbank einen Verweis auf die mit dem Bezeichner assoziierte Ressource. Zum Beispiel empfängt die Netzwerkschnittstelle 114 die Antwort in _Schritt 502 über die die Verbindung 203, das Netzwerk 201 und die Verbindung 204. Ein Beispiel für einen Verweis ist eine URL der Ressource.

In einem optionalen Schritt 503 wird auf die mit dem Bezeichner assoziierte Ressource zugegriffen.

Wie oben beschrieben, ist die Ressource beispielsweise eine Webseite und wird von dem Server 13 derart bereitgestellt, dass auf die Ressource und/oder die von der Ressource umfassten Informationen über das Netzwerk 201 zugegriffen werden kann. Zum Beispiel wird die Webseite von dem Server 13 in Schritt 402 des Ablaufdiagramms 400 derart bereitgestellt, dass die mobile Vorrichtung 11 auf die Ressource und/oder die von der Ressource umfassten Informationen über die Verbindung 203, das Netzwerk 201 und die Verbindung 202 zugreifen kann. Zum Beispiel ist die Ressource in dem Netzwerk 201 durch eine URL lokalisierbar und/oder identifizierbar.
Zum Beispiel wird in Schritt 503 eine Anfrage für die Ressource (z.B. eine HTTP-GET Anfrage mit der URL der Ressource) von der Netzwerkschnittstelle 114 über die Verbindung 203, das Netzwerk 201 und die Verbindung 202 an den Server 13 gesendet. Zum Beispiel wird in Schritt 503 als Antwort auf die Anfrage für die Ressource die Ressource und/oder von der Ressource umfasste Informationen über die Verbindung 202, das Netzwerk 201 und die Verbindung 203 von dem Server 13 an der Netzwerkschnittstelle 114 empfangen.
Anschließend wird die Ressource und/oder die von der Ressource umfassten Informationen beispielsweise durch die optionalen Ein-/Ausgabemittel 115 an einen Benutzer der mobilen Vorrichtung 11 ausgegeben. Zum Beispiel wird die Webseite auf einem Bildschirm der mobilen Vorrichtung 11 angezeigt.
Fig. 5b zeigt ein Ablaufdiagramm 600 mit Schritten einer beispielhaften Ausführungsform des dritten Verfahrens, die durch die Mittel der mobilen Vorrichtung 11 ausgeführt und/oder gesteuert werden. In einem Schritt 601 werden Aussendeinformationen drahtlos empfangen, wobei die Aussendeinformationen einen Bezeichner der Vorrichtung 10 umfassen, und wobei der Bezeichner mit einer Ressource assoziiert ist. Der Schritt 601 entspricht beispielsweise dem oben beschriebenen Schritt 501 des Ablaufdiagramms 500.

In einem optionalen Schritt 602 wird die Signalstärke und/oder die Größenordnung der Signalstärke des Funksignals 205, mit dem die Aussendeinformationen in Schritt 601 empfangen werden, bestimmt. Zum Beispiel ist die erste Netzwerkschnittstelle 113 eingerichtet, die Signalstärke und/oder die Größenordnung der Signalstärke des Funksignals 205, mit dem die Aussendeinformationen in Schritt 601 empfangen werden, zu bestimmen. Zum Beispiel umfasst die Netzwerkschnittstelle Mittel zum Messen der Signalstärke eines empfangenen Funksignals.

In einem optionalen Schritt 603 wird die Position der mobilen Vorrichtung 11 zumindest teilweise in Abhängigkeit der Aussendeinformationen bestimmt. Zum Beispiel umfasst der Programmspeicher 111 der mobilen Vorrichtung 11 Programmanweisungen, wobei der Programmspeicher 111 und die Programmanweisungen jeweils eingerichtet sind, um, zusammen mit dem Prozessor 110, den Prozessor 110 zu veranlassen, die Position der mobilen Vorrichtung 11 zumindest teilweise in Abhängigkeit der Aussendeinformationen zu bestimmen.

Wie oben beschrieben, kann die mit dem Bezeichner der Vorrichtung assoziierte Ressource zum Beispiel eine Positionsinformation über die Position der Vorrichtung 10 umfassen. Unter Positionsinformationen sollen beispielsweise Informationen verstanden werden, die eine Bestimmung der Position der Vorrichtung 10 ermöglichen. Zum Beispiel umfassen die Positionsinformationen eine Positionsangabe über die geographische Position der Vorrichtung 10. Ein Beispiel für eine solche Positionsangabe ist eine Adresse der Vorrichtung 10 und/oder geographische Koordinaten der Vorrichtung 10.

Zum Beispiel ist der Bezeichner der Vorrichtung 10 in einem Eintrag einer Positionsdatenbank mit den Positionsinformationen enthalten. Zum Beispiel sind der Eintrag und/oder die Positionsinformationen in der Positionsdatenbank durch den Bezeichner der Vorrichtung 10 identifizierbar und/oder lokalisierbar. Beispielsweise kann die Positionsinformation in Schritt 603 durch eine Anfrage mit dem Bezeichner an die Positionsdatenbank erhalten werden. Zum Beispiel ist die Positionsdatenbank in diesem Fall derart eingerichtet, dass die Positionsdatenbank als Antwort auf eine an die Positionsdatenbank gerichtete Abfrage mit dem Bezeichner der Vorrichtung 10 die Positionsinformation über die Position der Vorrichtung 10 ausgibt. Zum Beispiel wird die Positionsdatenbank von der mobilen Vorrichtung 11 bereitgestellt. Es ist jedoch auch denkbar, dass die Positionsdatenbank von dem Server 12 und/oder dem Server 13 bereitgestellt wird.

Zum Beispiel wird die Position der mobilen Vorrichtung 11 in Schritt 603 zumindest teilweise in Abhängigkeit der durch den Bezeichner lokalisierbaren und/oder identifizierbaren Positionsinformationen über die Position der Vorrichtung 10 bestimmt. Zum Beispiel wird die Position der mobilen Vorrichtung 11 dabei derart bestimmt, dass sich die mobile Vorrichtung 11 an der Position der Vorrichtung 10 und/oder in einer Umgebung um die Position der Vorrichtung 10 herum befindet. Die Umgebung ist beispielsweise durch die Sendereichweite der Netzwerkschnittstelle 103 der Vorrichtung 10 beschränkt und zum Beispiel entsprechend vorgegeben.

Wie oben beschrieben, umfassen die Aussendeinformationen optional eine Signalstärkenangabe. Diese Signalstärkenangabe kann für eine noch genauere Bestimmung der Position der mobilen Vorrichtung 11 verwendet werden. Zum Beispiel wird die Position der mobilen Vorrichtung 11 in Schritt 603 zumindest teilweise in Abhängigkeit von der von den Aussendeinformationen umfassten Signalstärkenangabe und von der in Schritt 602 bestimmten Signalstärke und/oder der in Schritt 602 bestimmten Größenordnung der Signalstärke des Funksignals 205 bestimmt. Zum Beispiel wird die Entfernung der mobilen Vorrichtung 11 von der Vorrichtung 10 in Abhängigkeit von der von den Aussendeinformationen umfassten Signalstärkenangabe und von der in Schritt 602 bestimmten Signalstärke und/oder der in Schritt 602 bestimmten Größenordnung der Signalstärke des Funksignals 205 bestimmt. Beispielsweise wird die die Position der mobilen Vorrichtung dabei derart bestimmt, dass sich die mobile Vorrichtung 11 auf Positionen mit einer entsprechenden Entfernung zur Position der Vorrichtung 10 um die Position der Vorrichtung 10 herum befindet. Wenn Funksignale mit Aussendeinformationen von weiteren erfindungsgemäßen Vorrichtungen empfangen werden, kann die Position der mobilen Vorrichtung 11 entsprechend weiter eingeschränkt werden.

Die Abfolge der einzelnen Verfahrensschritte in den einzelnen Ablaufdiagrammen ist nicht zwingend, soweit nicht anders angegeben sind alternative Abfolgen der Verfahrensschritte denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

Die in dieser Spezifikation beschriebenen beispielhaften Ausführungsformen der vorliegenden Erfindung sollen auch in allen Kombinationen miteinander offenbart sein. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Unter die Formulierung "und/oder" fallen sowohl der Fall "und" als auch der Fall "oder". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren (300), umfassend:
- drahtloses Aussenden (301) von Aussendeinformationen von einer Vorrichtung (10), wobei die Aussendeinformationen einen Bezeichner der Vorrichtung (10) umfassen, wobei der Bezeichner derart mit einer Ressource assoziiert ist, dass die Ressource durch den Bezeichner identifizierbar und/oder lokalisierbar ist, und wobei die Ressource von einem Server (13) bereitgestellt wird,
- Erfassen (302) von Umgebungsinformationen über die Umgebung der Vorrichtung (10) an der Vorrichtung (10) und/oder Erhalten (302) von Umgebungsinformationen über die Umgebung der Vorrichtung (10) an der Vorrichtung (10), und
- Senden (303) der Umgebungsinformationen über die Umgebung der Vorrichtung (10) von der Vorrichtung (10) über eine Netzwerkverbindung an den Server (13), wobei die Umgebungsinformationen von der Vorrichtung über eine Netzwerkverbindung in einem ersten Netzwerk an den Server übertragen werden, und wobei die mit dem Bezeichner assoziierte Ressource durch den Server derart bereitgestellt wird, dass sie über ein zweites Netzwerk aufrufbar ist.

2. Verfahren gemäß Anspruch 1, wobei die Ressource nicht durch die Vorrichtung bereitgestellt wird.

3. Verfahren gemäß einem der Ansprüche 1 und 2, wobei die Aussendeinformationen gemäß einem drahtlosen Kommunikationsprotokoll ausgesendet werden.

4. Verfahren gemäß einem der Ansprüche 1 bis 3, wobei die Aussendeinformationen in Form eines Rundfunksignals, eines Funkfeuersignals und/oder eines Beacon-Signals ausgesendet werden.

5. Verfahren gemäß Anspruch 4, wobei die Aussendeinformationen ferner eine Signalstärkenangabe umfassen, wobei die Signalstärkenangabe von einer Signalstärke des Funksignals (205) abhängt.

6. Verfahren gemäß einem der Ansprüche 1 bis 5, wobei die Aussendeinformationen in regelmäßigen Zeitabständen ausgesendet werden.

7. Verfahren gemäß einem der Ansprüche 1 bis 6, wobei der Bezeichner ein eindeutiger Bezeichner der Vorrichtung (10) ist.

8. Verfahren gemäß einem der Ansprüche 1 bis 7, wobei die Ressource eine Ressource in einem Netzwerk ist, und/oder wobei die Ressource eine Webseite ist.

9. Verfahren gemäß einem der Ansprüche 1 bis 8, wobei die Ressource Positionsinformationen über die Position der Vorrichtung (10) und/oder von der Position der Vorrichtung (10) abhängige Informationen und/oder von der Umgebung der Vorrichtung (10) abhängige Informationen umfasst.

10. Vorrichtung (10), umfassend:
- Mittel zur Ausführung und/oder Steuerung der Schritte des Verfahrens gemäß einem der Ansprüche 1 bis 9.

11. Vorrichtung gemäß Anspruch 10, wobei die Vorrichtung (10) an oder in einer Lampe im Außenbereich, insbesondere einer Straßenlampe, anordenbar oder angeordnet ist, und/oder wobei die Vorrichtung (10) Teil einer Vorrichtung zum Steuern eines Leuchtmittels einer Lampe im Außenbereich, insbesondere einer Straßenlampe, ist.

12. Verfahren (400), umfassend:
- Bereitstellen (402) einer Ressource durch einen Server (13), wobei die Ressource derart mit einem Bezeichner einer Vorrichtung (10) assoziiert ist, dass die Ressource durch den Bezeichner identifizierbar und/oder lokalisierbar ist,
- Empfangen (401) von Umgebungsinformationen über die Umgebung der Vorrichtung (10) von der Vorrichtung (10) über eine Netzwerkverbindung an dem Server (13), und
- Bereitstellen der Ressource durch den Server (13) zumindest teilweise in Abhängigkeit der Umgebungsinformationen, wobei die Umgebungsinformationen von der Vorrichtung über eine Netzwerkverbindung in einem ersten Netzwerk an den Server übertragen werden, und wobei die mit dem Bezeichner assoziierte Ressource durch den Server derart bereitgestellt wird, dass sie über ein zweites Netzwerk aufrufbar ist.

13. Server (13), umfassend:
- Mittel zur Ausführung und/oder Steuerung der Schritte des Verfahrens gemäß Anspruch 12.

14. Computerprogramm, umfassend:
- Programmanweisungen, die eine Vorrichtung (10, 13) zur Ausführung und/oder Steuerung der Schritte des Verfahrens gemäß einem der Ansprüche 1 bis 9 oder der Schritte des Verfahrens gemäß Anspruch 12 veranlassen, wenn das Computerprogramm von einem oder mehreren Prozessoren (100, 130) der Vorrichtung (10, 13) ausgeführt wird.

15. System, umfassend:
- eine Vorrichtung (10) gemäß einem der Ansprüche 10 bis 11,
- einen Server (13) gemäß Anspruch 13, und eine
- mobile Vorrichtung (11).

## Claims

1. Method (300), comprising:
- wireless transmitting (301) of transmission information from an apparatus (10), wherein the transmission information comprises an identifier of the apparatus (10), wherein the identifier is associated with a resource in such a way that the resource is identifiable and/or localisable by the identifier, and wherein a server (13) provides the resource associated with the identifier,
- capturing (302) vicinity information about the vicinity of the apparatus (10) at the apparatus (10) and/or obtaining (302) vicinity information about the vicinity of the apparatus (10) at the apparatus (10), and
- transmitting (303) the vicinity information about the vicinity of the apparatus (10) over a network connection from the apparatus (10) to the server (13),
wherein the vicinity information is transmitted over a network connection in a first network from the apparatus to the server, and wherein the resource associated with the identifier is provided by the server in such a way that it is retrievable over a second network.

2. Method according to Claim 1, wherein the resource is not provided by the apparatus.

3. Method according to any one of Claims 1 to 2, wherein the transmission information is transmitted according to a wireless communications protocol.

4. Method according to any one of Claims 1 to 3, wherein the transmission information is transmitted in the form of a broadcast signal, a radio beacon signal and/or a beacon signal.

5. Method according to Claim 4, wherein the transmission information also comprises a signal strength indication, wherein the signal strength indication depends on the signal strength of the radio signal (205).

6. Method according to any one of Claims 1 to 5, wherein the transmission information is transmitted at regular intervals.

7. Method according to any one of Claims 1 to 6, wherein the identifier is a unique identifier of the apparatus (10).

8. Method according to any one of Claims 1 to7, wherein the resource is a resource in a network, and/or wherein the resource is a web page.

9. Method according to any one of Claims 1 to 8, wherein the resource comprises position information about the position of the apparatus (10) and/or information dependent on the position of the apparatus (10) and/or information dependent on the vicinity of the apparatus (10).

10. Apparatus (10), comprising
- means for performing and/or controlling the steps of the method according to any one of Claims 1 to 9.

11. Apparatus according to Claim 10, wherein the apparatus (10) is arrangable or is arranged on or in a light outside, in particular a street lightand/or, wherein the apparatus (10) is part of an apparatus for controlling a lamp of a light outside, in particular a street light.

12. Method (400), comprising:
- providing (402) a resource by a server (13), wherein the resource is associated with an identifier of an apparatus (10) in such a way that the resource is identifiable and/or localisable by the identifier,
- receiving (401) vicinity information about the vicinity of the apparatus (10) over a network connection from the apparatus (10) at the server (13), and
- providing the resource by the server (13) at least partially depending on the vicinity information,
wherein the vicinity information is transmitted over a network connection in a first network to the server, and wherein the resource associated with the identifier is provided by the server in such a way that it is retrievable over a second network.

13. Server (13), comprising:
- means for performing and/or controlling the steps of the method according to Claim 12.

14. Computer program, comprising:
- program instructions which cause an apparatus (10, 13) to perform and/or control the steps of the method according to Claims 1 to 9 or the steps of the method according to Claim 12, when the computer program is executed by one or more processor(s) (100, 130) of the apparatus (10, 13).

15. System, comprising:
- an apparatus (10) according to any one of Claims 10 to 11,
- a server (13) according to Claim 13, and a
- mobile apparatus (11).

## Revendications

1. Procédé (300) comprenant :
- l'émission sans fil (301) d'informations d'émission d'un dispositif (10), sachant que les informations d'émission comprennent un identificateur du dispositif (10), sachant que l'identificateur est associé à une ressource de manière à ce que la ressource puisse être identifiée et / ou localisée par l'identificateur et sachant que la ressource est mise à disposition à partir d'un server (13),
- la saisie (302), sur le dispositif (10), d'informations sur l'environnement, concernant l'environnement du dispositif (10), et / ou la réception (302), sur le dispositif (10), d'informations d'environnement concernant l'environnement du dispositif (10), et
- l'émission (303) des informations d'environnement sur l'environnement du dispositif (10), à partir du dispositif (10), à destination du server (13), par le biais d'une connexion réseau, sachant que les informations d'environnement du dispositif sont transmises au server, dans un premier réseau, par le biais d'une liaison réseau, et sachant que la ressource associée à l'identificateur est mise à disposition par le server de manière à ce qu'elle soit accessible par le biais d'un deuxième réseau.

2. Procédé selon la revendication 1, sachant que la ressource n'est pas mise à disposition par le dispositif.

3. Procédé selon l'une des revendications 1 et 2, sachant que les informations d'émission sont émises selon un protocole de communication sans fil.

4. Procédé selon l'une des revendications 1 à 3, sachant que les informations d'émission sont émises sous la forme d'un signal radio, d'un signal radiophare et / ou d'un signal de balise.

5. Procédé selon la revendication 4, sachant que les informations d'émission comprennent en outre des indications de puissance de signal, sachant que les indications de puissance de signal dépendent d'une puissance de signal du signal radio (205).

6. Procédé selon l'une des revendications 1 à 5, sachant que les informations d'émission sont émises à intervalles de temps réguliers.

7. Procédé selon l'une des revendications 1 à 6, sachant que l'identificateur est un indicateur univoque du dispositif (10).

8. Procédé selon l'une des revendications 1 à 7, sachant que la ressource est une ressource dans un réseau et / ou sachant que la ressource est une page web.

9. Procédé selon l'une des revendications 1 à 8, sachant que la ressource comprend des informations de position concernant la position du dispositif (10) et / ou des informations dépendant de la position du dispositif (10) et / ou des informations dépendant de l'environnement du dispositif (10).

10. Dispositif (10) comprenant :
- des moyens d'exécution et / ou de commande des étapes du procédé selon l'une des revendications 1 à 9.

11. Dispositif selon la revendication 10, sachant que le dispositif (10) peut être disposé et / ou est disposé dans une lampe installée à l'extérieur, en particulier dans un réverbère public, et / ou que le dispositif (10) fait partie d'une installation de commande d'un moyen d'éclairage d'une lampe située à l'extérieur, en particulier d'un réverbère public.

12. Procédé (400) comprenant:
- mise à disposition (402) d'une ressource par un server (13), sachant que la ressource est associée à un identificateur du dispositif (10) de manière à ce que la ressource puisse être identifiée et / ou localisée par l'identificateur,
- réception (401) par le dispositif (10) d'informations d'environnement relatives à l'environnement du dispositif (10), par le biais d'une connexion réseau sur le server (13), et
- mise à disposition de la ressource, par le server (13), au moins partiellement en fonction des informations d'environnement, sachant que les informations d'environnement sont transmises du dispositif au server par le biais d'une connexion réseau, dans un premier réseau, et sachant que la ressource, associée à l'identificateur, est mise à disposition par le server de manière à ce qu'elle puisse être accessible par le biais d'un deuxième réseau.

13. server (13) comprenant :
- des moyens d'exécution et / ou de commande des étapes du procédé selon la revendication 12.

14. Programme d'ordinateur comprenant:
- des instructions de programme, qui incitent un dispositif (10, 13) à l'exécution et / ou à la commande des étapes du procédé selon l'une des revendications 1 à 9 ou des étapes du procédé selon la revendication 12, quand le programme d'ordinateur est exécuté par un ou par plusieurs processeurs (100, 130) du dispositif (10, 13).

15. Système, comprenant:
- un dispositif (10) selon l'une des revendications 10 à 11,
- un server (13) selon la revendication 13, et un
- dispositif mobile (11).
